# EUROPEAN PATENT APPLICATION

(11) **EP 4 796 599 A1**
(43) Date of publication of application: **26.08.2026**
(21) Application number: 24879698.9
(22) Date of filing: 15.10.2024
(51) Int. Cl.: C08L 101/00, C08B 15/05, C08J 5/04, C08K 5/54, C08K 5/5415, C08L 1/00, D06M 13/507

(54) **RESIN COMPOSITION OBTAINED BY BLENDING MODIFIED CELLULOSE FIBER, AND METHOD FOR PRODUCING MODIFIED CELLULOSE FIBER**

(30) Priority: 17.10.2023 JP 2023179006
(71) Applicant: Kao Corporation, Tokyo 103-8210 (JP)
(72) Inventor: YAMATO, Kyohei, Chuo-ku, Tokyo 103-8210 (JP); TAIRA, Ryosei, Chuo-ku, Tokyo 103-8210 (JP)
(74) Representative: Hoffmann Eitle
(86) International application number: PCT/JP2024/036655
(87) International publication number: WO 2025/084275

(57) **Abstract**

The present invention relates to a method of producing a modified cellulose fiber which can improve heat resistance and strength of a resin upon being blended into the resin, and a resin composition obtained by blending the modified cellulose fiber. The resin composition of the present invention is obtained by blending a modified cellulose fiber binding a cellulose fiber bound with a modifying group other than a silanol group and a silane compound, and a resin.

## Description

### TECHNICAL FIELD

The present invention relates to a resin composition obtained by blending a modified cellulose fiber. The present invention further relates to a method of producing the modified cellulose fiber.

### BACKGROUND ART

Miniaturizing, lightweighting or thinning an electric device handling high-speed and large-capacity information such as a recently quickly diffusing-digital household appliance has progressed. Therefore, the improvement of heat resistance or improvement of strength of a member constituting an electric device has been needed.

For example, since a cellulose nanofiber (CNF) has excellent strength, CNF is known to act as a reinforcement when complexed with a resin or the like in a small amount addition (Patent Publication 1).

Patent Publication 1: Japanese Patent Laid-Open No. 2006-241450

### SUMMARY OF THE INVENTION

The present invention relates to the following [1] to [18]:
[1] A resin composition obtained by blending:
   a modified cellulose fiber binding a cellulose fiber bound with a modifying group other than a silanol group and a silane compound, and
   a resin.
[2] The resin composition according to the above [1], wherein the silane compound is one or more silane compounds selected from the group consisting of a chlorosilane compound, an alkoxy silane compound, an acetoxy silane compound and a silanol compound.
[3] The resin composition according to the above [1] or [2], wherein the blended amount of the silane compound is 50 parts by mass or more, based on 100 parts by mass of a cellulose fiber moiety of the cellulose fiber bound with the modifying group other than the silanol group.
[4] The resin composition according to any one of the above [1] to [3], wherein the blended amount of the modified cellulose is 4.0% by mass or more and 20% by mass or less in the resin composition.
[5] The resin composition according to any one of the above [1] to [4], wherein the blended amount of the cellulose fiber is 0.1% by mass or more and 20% by mass or less in the resin composition.
[6] The resin composition according to any one of the above [1] to [5], wherein the blended amount of the resin is 70% by mass or more and 95% by mass or less in the resin composition.
[7] The resin composition according to any one of the above [1] to [6], wherein a mass ratio of the blended amount of the modified cellulose to the blended amount of the resin (the blended amount of the modified cellulose fiber / the blended amount of the resin) is 5/95 or more and 20/80 or less in the resin composition.
[8] The resin composition according to any one of the above [1] to [7], wherein a mass ratio of the blended amount of the cellulose fiber to the blended amount of the resin (the blended amount of the cellulose fiber / the blended amount of the resin) is 0.1/99.9 or more and 20/80 or less in the resin composition.
[9] A resin molded product containing a resin composition as defined in any one of the above [1] to [8].
[10] A method of producing a modified cellulose fiber including:
   Step 1: binding a modifying group other than a silanol group to an ionic group of a cellulose fiber having the ionic group to obtain a cellulose fiber bound with the modifying group, and
   Step 2: mixing the cellulose fiber bound with the modifying group with one or more silane compounds selected from the group consisting of a chlorosilane compound, an alkoxy silane compound, an acetoxy silane compound and a silanol compound,
   wherein the blended amount of the silane compound in Step 2 is 50 parts by mass or more, based on 100 parts by mass of a cellulose fiber moiety of the cellulose fiber bound with the modifying group.
[11] A method of producing a modified cellulose fiber including:
   Step 3: mixing a cellulose fiber having an ionic group with one or more silane compounds selected from the group consisting of a chlorosilane compound, an alkoxy silane compound, an acetoxy silane compound and a silanol compound to obtain a cellulose fiber bound with the silane compound, and
   Step 4: binding a modifying group other than a silanol group to an ionic group of the cellulose fiber bound with the silane compound having the ionic group to obtain a modified cellulose fiber,
   wherein the blended amount of the silane compound in Step 3 is 50 parts by mass or more, based on 100 parts by mass of a cellulose fiber moiety of the cellulose fiber having the ionic group.
[12] A modified cellulose fiber produced by a method as defined in the above [10] or [11].
[13] A composition containing a modified cellulose fiber as defined in the above [12].
[14] The composition according to the above [13] further containing an organic solvent and/or a resin.
[15] An additive for resin containing a modified cellulose fiber as defined in the above [12].
[16] The additive for a resin according to the above [15] further containing an organic solvent.
[17] A method of producing a resin composition including:
   Step 5: binding a modifying group other than a silanol group to an ionic group of a cellulose fiber having the ionic group to obtain a cellulose fiber bound with the modifying group, and
   Step 6: mixing one or more silane compounds selected from the group consisting of a chlorosilane compound, an alkoxy silane compound, an acetoxy silane compound and a silanol compound, the cellulose fiber bound with the modifying group and a resin,
   wherein the blended amount of the silane compound in Step 6 is 50 parts by mass or more, based on 100 parts by mass of a cellulose fiber moiety of the cellulose fiber bound with the modifying group.
[18] A method of producing a resin composition including:
   Step 7: mixing a cellulose fiber having an ionic group with one or more silane compounds selected from the group consisting of a chlorosilane compound, an alkoxy silane compound, an acetoxy silane compound and a silanol compound to obtain a cellulose fiber bound with the silane compound, and
   Step 8: binding a modifying group other than a silanol group to an ionic group of the cellulose fiber bound with the silane compound having the ionic group to obtain a modified cellulose fiber,
   wherein the blended amount of the silane compound in Step 7 is 50 parts by mass or more, based on 100 parts by mass of a cellulose fiber moiety of the cellulose fiber having the ionic group.

### DETAILED DESCRIPTION OF THE INVENTION

Currently, a resin which is utilized for a member constituting an electric device has various types, and each of them has different features or properties. When a cellulose fiber such as CNF is complexed with a resin, if dispersibility in the resin is bad, an aggregate may form, potentially leading to reduction of strength.

The present invention relates to a method of producing a modified cellulose fiber which can improve heat resistance or strength of a resin, when blended to the resin.

According to the present invention, a method of producing a modified cellulose fiber which can improve heat resistance or strength of a resin, when blended to the resin can be provided.

As a result of studies of blending of a resin, a conventional modified cellulose fiber and various components, the present inventors found that heat resistance and mechanical strength of a resin was unexpectedly improved by binding a specified silane compound, for example, a silane compound acquiring a silanol group due to hydrolysis or the like to a cellulose fiber, and completed the present invention.

Although the mechanisms of exhibition of such effects are not clear, they are assumed to be as follows. In other words, it was assumed that a functional group in a resin forming a crosslink reacts with a hydroxy group which the conventional modified cellulose fiber has when the resin cures, consequently inhibiting crosslinking. Therefore, it is assumed that the inhibition of crosslinking by a hydroxy group could be attenuated by previously reacting the hydroxy group which the conventional modified cellulose fiber has with the silane compound when the resin cures, and consequently heat resistance or mechanical strength of the resin could be achieved.

### A. Method of Producing Modified Cellulose Fiber Including Step 1 and Step 2

One embodiment of a method of producing the modified cellulose fiber of the present invention is a method of producing a modified cellulose fiber including:
Step 1: binding a modifying group other than a silanol group to an ionic group of a cellulose fiber having the ionic group to obtain a cellulose fiber bound with the modifying group, and
Step 2: mixing the cellulose fiber bound with the modifying group with one or more silane compounds selected from the group consisting of a chlorosilane compound, an alkoxy silane compound, an acetoxy silane compound and a silanol compound,
wherein the blended amount of the silane compound in Step 2 is 50 parts by mass or more based on 100 parts by mass of a cellulose fiber moiety of the cellulose fiber bound with the modifying group.

### [Cellulose Fiber Having Ionic Group]

Main properties of "a cellulose fiber having the ionic group" subjected to Step 1 are as follows.

### [Crystalline Structure]

A cellulose fiber having an ionic group is preferably one having a cellulose type I crystal structure, from the viewpoint of exhibiting strength of the resin after curing. Crystallinity of cellulose fiber having an ionic group is preferably 10% or more, more preferably 15% or more, even more preferably 20% or more, even more preferably 30% or more, even more preferably 40% or more, and even more preferably 50% or more, from the viewpoint of exhibiting strength of the resin after curing. In addition, the crystallinity is preferably 90% or less, more preferably 85% or less, and even more preferably 80% or less, from the viewpoint of availability of a raw material. Incidentally, as used herein, the crystallinity of various cellulose fibers is cellulose type I crystallinity calculated from values of diffraction intensity by X-ray diffraction, which can be measured according to the method described in Examples set forth below. Incidentally, the cellulose type I refers to a crystalline form of a natural cellulose, and the cellulose type I crystallinity means a proportion occupied by the amount of crystalline region within the entire cellulose fiber. The presence or absence of the cellulose I crystal structure can be judged by the presence of a peak at 2θ = 22.6° in the X-ray diffraction measurement.

### [Average Fiber Diameter]

The cellulose fiber having an ionic group is preferably 1 µm or more, and more preferably 5 µm or more, from the viewpoint of handling property, availability and cost, and the cellulose fiber is preferably 300 µm or less, more preferably 100 µm or less, and even more preferably 60 µm or less, from the viewpoint of enhancing handling property and dispersibility.

### [Average Fiber Length]

The average fiber length of the cellulose fiber having an ionic group is preferably 1 µm or more, more preferably 5 µm or more, and even more preferably 10 µm or more, from the viewpoint of exhibiting strength of the resin after curing, on the other hand, the average fiber length is preferably 500 µm or less, more preferably 400 µm or less, and even more preferably 300 µm or less, from the viewpoint of handling property.

The average fiber diameter and the average fiber length of the cellulose fiber having an ionic group are obtained by a method described in Examples set forth below.

### [Ionic Group]

The ionic group includes an anionic group and a cationic group. The anionic group includes, for example, a carboxy group, a sulfonate group, a phosphate (phosphite) group, and the like, and the cationic group includes a group having an onium such as ammonium, phosphonium and sulfonium in the group, and the like. The ionic group may be introduced alone or in combination of two or more kinds.

The ionic group is preferably an anionic group, and more preferably a carboxy group from the viewpoint of an efficiency of introduction into a cellulose fiber.

### [Preparation of Cellulose Fiber Having Ionic Group]

"A cellulose fiber having the ionic group" subjected to Step 1 can be prepared by introducing the desired ionic group into a raw material cellulose fiber.

### [Cellulose Fiber]

A raw material cellulose fiber of a cellulose fiber having an ionic group is preferably a natural cellulose fiber from the environmental aspect, and includes, for example, a wooden pulp such as a pulp from needle-leaf trees and a pulp from broad-leaf trees; a cotton-based pulp such as a cotton linter and a cotton lint; a non-wooden pulp such as a straw pulp and a bagasse pulp; bacterial cellulose, and the like, and these can be used alone or in combination of two or more kinds.

The average fiber diameter of the raw material cellulose fiber is, but not particularly limited to, preferably 5 µm or more, and more preferably 7 µm or more from the viewpoint of handling property and cost, and the average fiber diameter is preferably 500 µm or less, and more preferably 300 µm or less from the same viewpoint. The average fiber diameter of the raw material cellulose fiber is obtained by a method described in Examples set forth below.

In addition, the average fiber length of the raw material cellulose fiber is, but not particularly limited to, preferably 5 µm or more, and more preferably 25 µm or more from the viewpoints of availability and cost, and the average fiber length is preferably 5,000 µm or less, and more preferably 3,000 µm or less from the same viewpoints. The average fiber length of the raw material cellulose fiber can be measured according to a method described in Examples set forth below.

### [Method of Introducing Ionic Group]

The method of introducing an ionic group, for example a carboxy group as an anionic group into a cellulose fiber includes a method of oxidizing a hydroxy group of the cellulose fiber to convert the hydroxy group into a carboxy group, and a method of reacting a hydroxy group of a cellulose fiber with at least one selected from the group consisting of a compound having a carboxy group, an acid anhydrate of a compound having a carboxy group and derivatives thereof.

The cellulose fiber in which an anionic group is introduced into a cellulose fiber is herein referred to as "anionically modified cellulose fiber."

A method of subjecting a hydroxy group of a cellulose fiber to an oxidization treatment includes a method of reacting an oxidant such as sodium hypochlorite and a bromide such as sodium bromide with the raw material cellulose fiber by using 2,2,6,6-tetramethyl-1-pyperidin-N-oxyl (TEMPO) as a catalyst, as described in a publication of Japanese Patent Laid-Open No. 2015-143336 or a publication of Japanese Laid-Open No. 2015-143337.

A hydroxymethyl group at C6 position in a glucose unit constituting a cellulose fiber is selectively converted to a carboxy group by oxidizing a cellulose fiber by using TEMPO as a catalyst. Such a cellulose fiber in which a hydroxymethyl group at C6 position in a glucose unit is selectively converted to a carboxy group is referred to as "TEMPO-oxidized cellulose fiber." TEMPO-oxidized cellulose fiber is a one preferable example of a cellulose fiber having an ionic group in the present invention.

### [Carboxy Group Content]

The content of the ionic group in TEMPO-oxidized cellulose fiber, i.e. carboxy group content is preferably 0.1 mmol/g or more, more preferably 0.4 mmol/g or more, even more preferably 0.6 mmol/g or more, even more preferably 0.7 mmol/g or more, and even more preferably 0.8 mmol/g or more from the viewpoint of stably introducing a modifying group. In addition, the content is preferably 3 mmol/g or less, more preferably 2.5 mmol/g or less, even more preferably 2 mmol/g or less, even more preferably 1.9 mmol/g or less, and even more preferably 1.8 mmol/g or less from the viewpoint of improving handling property. Incidentally, "carboxy group content" means a total amount of carboxy groups in a glucose moiety constituting a cellulose fiber, which is specifically measured by a method described in Examples set forth below.

### [Step 1]

The Step 1 in the present invention is a step of binding a modifying group other than a silanol group to an ionic group of a cellulose fiber having the ionic group to obtain a cellulose fiber bound with the modifying group.

### [Modifying Group Other Than Silanol Group]

A specific example of "a modifying group other than a silanol group" in the present invention includes (a) a hydrocarbon group, and (b) a polymer group. These modifying groups alone or two or more kinds in combination are bound (introduced) to an ionic group of a cellulose fiber having the ionic group. The binding manner between the modifying group and the ionic group includes an ionic bond and/or a covalent bond. The covalent bond includes, for example, an amide bond, an ester bond and a urethane bond.

### (a) Hydrocarbon Group

The hydrocarbon group includes a monovalent hydrocarbon group, for example, a linear saturated hydrocarbon group, a linear unsaturated hydrocarbon group, a cyclic saturated hydrocarbon group, and a (heterocyclic) aromatic hydrocarbon group.

The hydrocarbon group has carbon atoms of one or more, preferably 3 or more, more preferably 8 or more, and even more preferably 10 or more, on the other hand, the hydrocarbon group has carbon atoms of preferably 30 or less, more preferably 22 or less, and even more preferably 18 or less. The hydrocarbon group may have a substituent set forth below, and a part of the hydrocarbon group may be substituted with a hydro nitrogen group.

The specific example of the linear saturated hydrocarbon group includes, for example, a methyl group, an ethyl group, a propyl group, an isopropyl group, a butyl group, a sec-butyl group, a tert-butyl group, an isobutyl group, a pentyl group, a tert-pentyl group, an isopentyl group, a hexyl group, an isohexyl group, a heptyl group, an octyl group, a 2-ethylhexyl group, a nonyl group, a decyl group, a dodecyl group, a tridecyl group, a trioctyl group, a tetradecyl group, an octadecyl group, a docosyl group, an octacosanyl group, and the like.

The specific example of the liner unsaturated hydrocarbon group includes, for example, an ethylene group, a propylene group, a butene group, an isobutene group, an isoprene group, a pentene group, a hexene group, a heptene group, an octene group, a nonene group, a decene group, a dodecene group, a tridecene group, a tetradecene group, and an octadecene group.

The specific example of the cyclic saturated hydrocarbon group includes, for example, a cyclopropane group, a cyclobutyl group, a cyclopentane group, a cyclohexyl group, a cycloheptyl group, a cyclooctyl group, a cyclononyl group, a cyclodecyl group, a cyclododecyl group, a cyclotridecyl group, a cyclotetradecyl group, a cyclooctadecyl group, and the like.

The aromatic hydrocarbon group is, for example, selected from the group consisting of an aryl group and an aralkyl group.

The aryl group includes, for example, a phenyl group, a naphthyl group, an anthryl group, a phenanthryl group, a biphenyl group, a triphenyl group, a terphenyl group, and a group in which these groups are substituted with a substituent set forth below.

The aralkyl group includes, for example, a benzyl group, a dibenzyl group, a trityl group, a phenethyl group, a phenylpropyl group, a phenylpentyl group, a phenylhexyl group, a phenylheptyl group, a phenyloctyl group, and a group in which aromatic groups of these groups are further substituted with a substituent.

### (b) Polymer group

A polymer group is a functional group containing a polymer structure. The molecular weight of the polymer group is preferably 100 or more, more preferably 200 or more, more preferably 300 or more, more preferably 400 or more, even more preferably 600 or more, even more preferably 1,000 or more, and even more preferably 1,500 or more from the viewpoint of improving dispersion stability. The molecular weight is preferably 10,000 or less, more preferably 7,000 or less, even more preferably 5,000 or less, even more preferably 4,000 or less, even more preferably 3,500 or less, and even more preferably 2,500 or less from the same viewpoint.

The polymer group is preferably a functional group having a repeating structure connected by a structure having an oxygen atom, more preferably a functional group having a repeating structure connected by an oxygen atom such as a polyoxyalkylene structure (alkylene oxide chain) and a polysiloxane structure (silicone chain), more preferably a functional group having a polyoxyalkylene structure, and even more preferably an alkoxy polyoxyalkylene group, from the viewpoint of improving dispersion stability.

### (b-1) Polysiloxane Structure (Silicone Chain)

The polysiloxane structure (silicone chain) is a structure in which a siloxane bond is a backbone, and may further accompany with an alkylene group. The polysiloxane structure may have a substituent set forth below.

### (b-2) Polyoxyalkylene Structure (Alkylene Oxide Chain)

The polyoxyalkylene structure (alkylene oxide chain) is preferably a (co-)polymer structure of one or more oxyalkylene selected from oxyalkylene having 2 or more carbon atoms and 8 or less carbon atoms, more preferably a (co-)polymer structure of one or more oxyalkylene selected from oxyalkylene having 2 or more carbon atoms and 4 or less carbon atoms, even more preferably a (co-)polymer structure of one or two oxyalkylene selected from ethylene oxide (EO) and propylene oxide (PO), and even more preferably a (co-)polymer structure in which ethylene oxide (EO) and propylene oxide (PO) are polymerized in random or block form (also referred to as (EO/PO) structure), from the viewpoint of improving dispersion stability.

The polyoxyalkylene structure includes, for example, a group represented by the following formula: 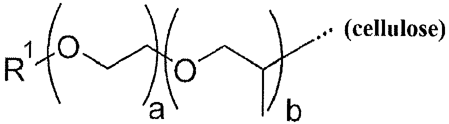 wherein R¹ is a hydrogen atom, a hydrocarbon group having 1 or more carbon atoms and 6 or less carbon atoms, or a -CH₂CH(CH₃)NH₂ group; EO and PO are present in a random or block form; a is 0 or a positive number showing an average number of moles added of EO; b is 0 or a positive number showing an average number of moles added of PO, with proviso that a case where both a and b are 0 is excluded.

When R¹ is a linear or branched alkyl group having 1 or more carbon atoms and 6 or less carbon atoms, the alkyl group is preferably a methyl group, an ethyl group, a n-propyl group and a sec-propyl group. R¹ may be a hydrogen atom.

a is preferably 0 or more, more preferably 1 or more, even more preferably 3 or more, even more preferably 6 or more, even more preferably 11 or more, even more preferably 15 or more, even more preferably 20 or more, even more preferably 25 or more, and even more preferably 30 or more from the viewpoint of improving dispersion stability. **a** is preferably 100 or less, more preferably 70 or less, even more preferably 60 or less, even more preferably 50 or less, and even more preferably 40 or less from the same viewpoint.

b is preferably 0 or more, more preferably 1 or more, even more preferably 3 or more, and even more preferably 5 or more from the viewpoint of improving dispersion stability. **b** is preferably 50 or less, more preferably 40 or less, even more preferably 30 or less, even more preferably 25 or less, even more preferably 20 or less, even more preferably 15 or less, and even more preferably 10 or less from the same viewpoint.

**a** + **b** in the above formula shows an average number of moles added of a total of EO and PO, and **a** + **b** is preferably 4 or more, more preferably 6 or more, and more preferably 8 or more, and **a** + **b** is preferably 100 or less, and more preferably 70 or less from the same viewpoint.

The alkylene group having from 1 to 3 carbon atoms includes a methylene group, an ethylene group and a propylene group.

The content ratio (mol%) of PO in the (EO/PO) chain can be calculated based on the **a** and **b,** and the content ratio can be specifically obtained by **b** × 100 / (**a** + **b**). The content ratio of PO is preferably 1% by mol or more, more preferably 5% by mol or more, even more preferably 7% by mol or more, and even more preferably 10% by mol or more from the viewpoint of further improving dispersibility. The content is preferably 100% by mol or less, more preferably 90% by mol or less, even more preferably 85% by mol or less, even more preferably 75% by mol or less, even more preferably 60% by mol or less, even more preferably 50% by mol or less, even more preferably 40% by mol or less, and even more preferably 30% by mol or less from the same viewpoint.

The formula weight (molecular weight) of the polyoxyalkylene structure is preferably 100 or more, more preferably 200 or more, even more preferably 300 or more, even more preferably 500 or more, even more preferably 1,000 or more, and even more preferably 1,500 or more from the viewpoint of improving dispersion stability. The formula weight is preferably 10,000 or less, more preferably 7,000 or less, even more preferably 5,000 or less, even more preferably 4,000 or less, even more preferably 3,500 or less, and even more preferably 2,500 or less from the same viewpoint.

### (c) Further Substituents

Incidentally, the modifying group may further have a substituent. The substituent includes, for example, alkoxy groups having from 1 to 6 carbon atoms, such as a methoxy group, an ethoxy group, a propoxy group, an isopropoxy group, a butoxy group, an isobutoxy group, a sec-butoxy group, a tert-butoxy group, a pentyloxy group, an isopentyloxy group, and a hexyloxy group; alkoxy-carbonyl groups of which an alkoxy group has 1 to 6 carbon atoms such as a methoxycarbonyl group, an ethoxycarbonyl group, a propoxycarbonyl group, an isopropoxycarbonyl group, a butoxycarbonyl group, an isobutoxycarbonyl group, a sec-butoxycarbonyl group, a tert-butoxycarbonyl group, a pentyloxycarbonyl group, and an isopentyloxycarbonyl group; halogen atoms such as a fluorine atom, a chlorine atom, a bromine atom, and an iodine atom; acyl groups having from 1 to 6 carbon atoms such as an acetyl group and a propionyl group; aralkyl groups; aralkyloxy groups; alkylamino groups having from 1 to 6 carbon atoms; dialkylamino groups of which an alkyl group has from 1 to 6 carbon atoms; and a hydroxy group.

### [Method of Binding Modifying Group Other Than Silanol Group]

Step 1 can be performed by mixing a cellulose fiber having an ionic group with a compound having a modifying group other than the above silanol group, herein referred to as "a compound for modification" to react both. A known method, for example a method described in a publication of Japanese Patent Laid-Open No. 2015-143336 can be used as a concrete method of Step 1. According to the method, the modifying group and the ionic group are bound via an ionic bond. Alternatively, Step 1 can be carried out by, for example, the method described in a publication of Japanese Patent Laid-Open No. 2015-143337. In this case, the modifying group and the ionic group are bound via an amide bond.

### (Compound for Modification)

The compound for modification includes a compound having a modifying group other than a silanol group, which can bind to a cellulose fiber having an ionic group, from the viewpoint of improving dispersion stability.

When a TEMPO-oxidized cellulose fiber is used as a cellulose fiber having an ionic group, the compound for modification includes preferably a compound having a modifying group and a cationic group, and even more preferably a compound having a modifying group and an amino group or a quaternary ammonium group. The preferred example of the compound for modification includes an amine compound having a modifying group and at least one amino group within a molecule, more specifically, an amine compound having a hydrocarbon group, an amine compound having a polysiloxane structure, an amine compound having a polyoxyalkylene structure, and the like, from the viewpoint of improving dispersion stability.

The amine compound may be any one of primary amines, secondary amines, tertiary amines, and quaternary ammonium compounds. The anionic component of the quaternary ammonium compound preferably includes halogen ions such as chloride ions and bromide ions, hydrogensulfate ions, perchlorate ions, tetrafluoroborate ions, hexafluorophosphate ions, trifluoromethanesulfonate ions, and hydroxide ions, from the viewpoint of reactivities.

### (a) Amine Compound Having Hydrocarbon Group

As specific examples of the amine compound having a hydrocarbon group, the primary to tertiary amines include, for example, ethylamine, diethylamine, triethylamine, propylamine, dipropylamine, butylamine, dibutylamine, hexylamine, 2-ethylhexylamine, dihexylamine, trihexylamine, octylamine, dioctylamine, trioctylamine, dodecylamine, didodecylamine, stearylamine, distearylamine, monoethanolamine, diethanolamine, triethanolamine, oleylamine, aniline, octadecylamine, dimethylbehenylamine, benzylamine, dibenzylamine, trithylamine, naphthylamine, imidazole, 2-methylimidazole, 2-ethylimidazole, 2-phenylimidazole, 2-ethyl-4-methylimidazole, 2-phenyl-4-methylimidazole, 1-(3-aminopropyl)imidazole, and the like.

The quaternary ammonium compound includes, for example, tetramethylammonium hydroxide (TMAH), tetraethylammonium hydroxide (TEAH), tetraethylammonium chloride, tetrapropylammonium hydroxide (TPAH), tetrabutylammonium hydroxide (TBAH), tetrabutylammonium chloride, lauryltrimethylammonium chloride, dilauryldimethyl chloride, stearyltrimethylammonium chloride, distearyldimethylammonium chloride, cetyltrimethylammonium chloride, and alkylbenzyldimethylammonium chloride.

As the amine compound having a hydrocarbon group, a commercially available product is used, or an amine compound can be prepared according to a known method.

Incidentally, a hydrocarbon compound having a cationic group may be a compound having a substituent. The specific example of the substituent includes a substituent described in the above "(c) further substituents."

### (b-1) Amine Compound Having Polysiloxane Structure

The amine compound includes, for example, a compound having a structure in which the backbone of a polysiloxane structure is bound with an amino group via an alkylene group or the like. The amine compound as used herein may be referred to as an "amino-modified silicone." As the amino-modified silicone, a commercially available product is used, or a compound can be prepared in accordance with a known method. The amino-modified silicone may be used alone or in a combination of two or more kinds.

The amino-modified silicone is preferably TSF4703 (kinetic viscosity: 1000, amino equivalence: 1600) and TSF4708 (kinetic viscosity: 1000, amino equivalence: 2800), manufactured by Momentive Performance Materials, Inc.; SS-3551 (kinetic viscosity: 1000, amino equivalence: 1600), SF8457C (kinetic viscosity: 1200, amino equivalence: 1800), SF8417 (kinetic viscosity: 1200, amino equivalence: 1700), BY16-209 (kinetic viscosity: 500, amino equivalence: 1800), BY16-892 (kinetic viscosity: 1500, amino equivalence: 2000), BY16-898 (kinetic viscosity: 2000, amino equivalence: 2900), FZ-3760 (kinetic viscosity: 220, amino equivalence: 1600), manufactured by Dow Corning-Toray Silicone Co., Ltd.; KF8002 (kinetic viscosity: 1100, amino equivalence: 1700), KF867 (kinetic viscosity: 1300, amino equivalence: 1700), KF-864 (kinetic viscosity: 1700, amino equivalence: 3800), BY16-213 (kinetic viscosity: 55, amino equivalence: 2700), BY16-853U (kinetic viscosity: 14, amino equivalence: 450), manufactured by Shin-Etsu Chemical Co., Ltd., from the viewpoint of performance. Within the parentheses ( ), the kinetic viscosity represents a measured value at 25°C (units: mm²/s), and the units for the amino equivalence are g/mol.

### (b-2) Amine Compound Having Polyoxyalkylene Structure

It is preferred that the polyoxyalkylene structure and a nitrogen atom of the amine compound in the amine compound is bound directly or via a linking group. The linking group is preferably a hydrocarbon group, which includes an alkylene group having preferably 1 or more carbon atoms and 6 or less carbon atoms, and more preferably 1 or more carbon atoms and 3 or less carbon atoms. It is preferable that the alkylene group is, for example, an ethylene group and a propylene group.

The amine compound having a polyoxyalkylene structure includes, for example, a compound represented by the following formula (i):

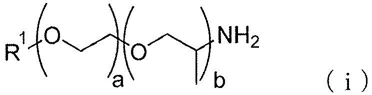

R¹, **a** and **b** in the formula (i) are the same as defined in R¹, **a** and **b** in the formula showing one example of the polyoxyalkylene structure mentioned above.

The amine compound having a polyoxyalkylene structure is a compound for introducing the modifying group shown by the polyoxyalkylene structure, and the amine compound can be prepared in accordance with a known method. For example, ethylene oxide and propylene oxide may be added in desired amounts to a propylene glycol alkyl ether, and thereafter a hydroxy group terminal may be aminated. The alkyl ether can be opened with an acid as needed so as to have a hydrogen atom at a terminal. These production methods can be referred to Japanese Patent Laid-Open No. Hei-3-181448, and the details of the amine compound are described, for example, in Japanese Patent Gazette No. 6,105,139.

As the amine compound having a polyoxyalkylene structure, for example, a commercially available product can be suitably used.

The specific example of the amine compound which may have a hydrocarbon group, accompanying with EO chain or PO chain, includes SUNBRIGHT MEPA-10H, SUNBRIGHT MEPA-20H, SUNBRIGHT MEPA-50H, SUNBRIGHT MEPA-10T, SUNBRIGHT MEPA-12T, SUNBRIGHT MEPA-20T, SUNBRIGHT MEPA-30T, SUNBRIGHT MEPA-40T, and the like, manufactured by NOF Corporation.

The specific example of the amine compound which may have a hydrocarbon group, accompanying with EO chain or PO chain, includes Jeffamine M-2070, Jeffamine M-2005, Jeffamine M-2095, Jeffamine M-1000, Jeffamine M-600, Surfoamine B200, Surfoamine L100, Surfoamine L200, Surfoamine L207, Surfoamine L300, Surfoamine B-100, XTJ-501, XTJ-506, XTJ-507, XTJ-508, M3000, Jeffamine ED-600, Jeffamine ED-900, Jeffamine ED-2003, Jeffamine D-230, Jeffamine D-400, Jeffamine D-2000, Jeffamine D-4000, XTJ-510, Jeffamine T-3000, Jeffamine T-5000, XTJ-502, XTJ-509, XTJ-510, and the like manufactured by HUNTSMAN. These may be used alone or in a combination of two or more kinds.

### (Mixing Condition)

The temperature during the mixing, i.e. the reaction temperature is less than 25°C, preferably 20°C or less, and more preferably 10°C or less, from the viewpoint of reactivity. In addition, the temperature is preferably -20°C or more, more preferably -10°C or more, and preferably -5°C or more, from the viewpoint of a yield of the product.

The mixing time is preferably 0.1 hours or more, more preferably 0.5 hours or more, and even more preferably 1 hour, and the mixing time is preferably 120 hours or less, more preferably 72 hours or less, even more preferably 48 hours or less, and even more preferably 24 hours or less, from the viewpoint of the productivity.

A solvent can be used during the mixing of Step 1. As the solvent, it is preferable to select a solvent that dissolves a compound used, including, for example, methanol, ethanol, isopropanol (IPA), N,N-dimethylformamide (DMF), dimethyl sulfoxide (DMSO), N,N-dimethylacetamide, tetrahydrofuran (THF), acetone, methyl ethyl ketone (MEK), cyclohexanone, ethyl acetate, acetonitrile, dichloromethane, chloroform, toluene, acetic acid, 1-methoxy-2-propanol (PGME), water and the like. These solvents can be used alone or in a combination of two or more kinds.

Further, the dispersing treatment may be carried out by a high-pressure homogenizer or the like after completing the mixing to evenly disperse each component in Step 1.

A condensing agent can be used during the mixing in Step 1. The modifying group and the ionic group can be bound via an amide bond by using the condensing agent. The condensing agent includes, but not particularly limited to, condensing agents described in Gosei Kagaku Shirizu Pepuchido Gosei (Synthetic Chemistry Series Peptide Synthesis) (Maruzen Publishing), page 116, or described in Tetrahedron, 57, 1551(2001), and the like. The condensing agent includes, for example, 4-(4,6-dimethoxy-1,3,5-triazin-2-yl)-4-methylmorpholinium chloride, and the like.

### (Amount of Compound for Modification Used)

The amount of the compound for modification used in Step 1 is preferably, for example, within the following range.

In other words, the range of the amount used can be shown as a range equivalent to that of a functional group of the compound for modification used (can react with an ionic group) to an ionic group of a cellulose fiber having the ionic group. Specifically, the amount is preferably 0.10 equivalences or more, more preferably 0.15 equivalences or more, and even more preferably 0.2 equivalences or more, from the viewpoint of improving dispersion stability. In addition, the amount is preferably 20 equivalences or less, more preferably 5 equivalences or less, even more preferably 1 equivalence or less, and even more preferably 0.7 equivalences or less, from the viewpoint of film-forming property.

### [Cellulose Fiber Bound with Modifying Group]

The main properties of the cellulose fiber bound with a modifying group obtained in Step 1 are as follows.

### (Average Fiber Diameter)

It is preferable that the cellulose fiber bound with the modifying group is subjected to a finely pulverizing treatment so as to have a nanometer size. Therefore, the average fiber diameter of the cellulose fiber bound with the modifying group is preferably 1 nm or more, and more preferably 2 nm or more, from the viewpoints of handling properties, availability, and costs, and the average fiber diameter is preferably 300 nm or less, more preferably 200 nm or less, even more preferably 150 nm or less, and even more preferably 120 nm or less, from the viewpoint of increasing handling properties and dispersibility.

### (Average Fiber Length)

The average fiber length of the cellulose fiber bound with the modifying group is preferably 10 nm or more, more preferably 30 nm or more, and even more preferably 50 nm or more, from the viewpoint of exhibition of strength of the resin after curation, on the other hand, the average fiber length is preferably 1000 nm or less, more preferably 500 nm or less, and even more preferably 300 nm or less, from the viewpoint of jetting property and handling properties.

The average fiber diameter and the average fiber length of the cellulose fiber bound with the modifying group are obtained in accordance with the methods described in Examples set forth below.

### (Binding Amount and Introduction Ratio of Modifying Group)

The binding amount of the modifying group in the cellulose fiber bound with the modifying group is preferably 0.01 mmol/g or more, from the viewpoint of affinity to a resin component, and the binding amount is preferably 3.0 mmol/g or less, from the same viewpoint. When any two or more modifying groups are simultaneously introduced into a cellulose fiber, it is preferable that a total of the binding amount of the modified groups is within the range described above.

The introduction ratio of the modifying group in the cellulose fiber bound with the modifying group is preferably 10 mol% or more, from the viewpoint of dispersibility, and the higher the introduction ratio, the more preferred, and the introduction ratio is preferably 100 mol%. When any two or more modifying groups are simultaneously introduced as the modifying groups, it is preferable that the introduction ratio is within the range defined above, in the range so that a total of the introduction ratios does not exceed the upper limit of 100 mol%.

The binding amount and the introduction ratio of the modifying group can be adjusted by the kinds of a compound for modification and the amount thereof added, a reaction temperature, a reaction time, the kinds of a solvent, or the like. The binding amount, mmol/g, and the introduction ratio, mol%, of the modifying group are the amount and the proportion of the modifying group introduced (bound) to an ionic group in the cellulose fiber bound with the modifying group. The binding amount and the introduction ratio of the modifying group in the cellulose fiber bound with the modifying group are calculated in accordance with the methods described in Examples set forth below, for example, in a case where the ionic group is a carboxy group.

### [Step 2]

Step 2 in the present invention is a step of mixing a cellulose fiber bound with the modifying group obtained in Step 1 with the specified silane compound, i.e. one or more silane compounds selected from the group consisting of a chlorosilane compound, an alkoxy silane compound, an acetoxy silane compound and a silanol compound.

It is assumed that at least a part of functional groups owned by the silane compound is converted to a silanol group and at least a part of the silanol group reacts with at least a part of hydroxy groups owned by the cellulose fiber bound with the modifying group by mixing, whereby the silane compound binds to the cellulose fiber bound with the modifying group.

### [Silane Compound]

The silane compound used in the step is one or more silane compounds selected from the group consisting of a chlorosilane compound, an alkoxy silane compound, an acetoxy silane compound and a silanol compound. Specifically, the silane compound includes a chlorosilane compound such as tetrachlorosilane, methyltrichlorosilane, phenyltrichlorosilane, dimethyldichlorosilane, diphenyldichlorosilane, methylvinyldichlorosilane, trimethylchlorosilane, and methyldiphenylchlorosilane; an alkoxy silane compound such as tetramethoxysilane, tetraethoxysilane, tetraisopropoxysilane, tetrabutoxysilane, methyltrimethoxysilane, methyltriethoxysilane, octyltrimethoxysilane, decyltrimethoxysilane, hexadecyltrimethoxysilane, polyethylene glycol-modified alkoxy silane, trimethoxyvinylsilane, triethoxyvinylsilane, 7-octenyltrimethoxysilane, n-propyltrimethoxysilane, 3-glycidoxypropyltrimethoxysilane, 3-glycidoxypropyltriethoxysilane, [8-(glycidyloxy)-n-octyl]trimethoxysilane, 2-(3,4-epoxycyclohexyl)ethyltrimethoxysilane, 3-chloropropyltrimethoxysilane, 3-mercaptopropyltrimethoxysilane, 3-(2-aminoethylamino)propyltrimethoxysilane, phenyltrimethoxysilane, phenyltriethoxysilane, dimethyldimethoxysilane, dimethyldiethoxysilane, p-styryltrimethoxysilane, 3-methacryloxypropyl methyldimethoxysilane, 3-methacryloxypropyltrimethoxysilane, 3-methacryloxypropyl methyldiethoxysilane, 3-methacryloxypropyltriethoxy, 8-methacryloxypropyltrimethoxysilane, 3-glycidoxypropyl methyldimethoxysilane, 3-glycidoxypropyl methyldiethoxysilane, 3-chloropropyl methyldimethoxysilane, diphenyldimethoxysilane, diphenyldiethoxysilane, dimethoxydiethoxysilane, trimethylmethoxysilane, trimethylethoxysilane, 3-aminopropyltrimethoxysilane, 3-aminopropyltriethoxysilane, 3-aminopropyldimethoxymethylsilane, 3-aminopropyldiethoxymethylsilane, N-2-(aminoethyl)-3-aminopropyltrimethoxysilane, N-2-(aminoethyl)-3-aminopropyltriethoxysilane, N-2-(aminoethyl)-3-aminopropylmethyldimethoxysilane, N-2-(aminoethyl)-8-aminooctyltrimethoxysilane, [3-(methylamino)propyl]trimethoxysilane, [3-(butylamino)propyl]trimethoxysilane, N-[3-(trimethoxysilyl)propyl]hexamethylenediamine, 3-triethoxysilyl-N-(1,3-dimethyl-butylidene)propylamine, N,N-dimethyl-3-(trimethoxysilyl)propyl amine, N-phenyl-3-aminopropyltrimethoxysilane, 3-ureidopropyl triethoxy silane and 3-ureidopropyl trialkoxy silane; an acetoxy silane compound such as tetraacetoxy silane, methyltriacetoxy silane, phenyltriacetoxy silane, dimethyldiacetoxy silane, diphenyldiacetoxy silane, trimethylacetoxy silane; a silanol compound such as dimethylsilanediol, diphenylsilanediol, trimethylsilanol; and the like. Among the above exemplified silane compounds, an alkoxy silane compound is preferred, from the viewpoints of availability and reactivity.

The more preferred example of the silane compound includes, for example, 3-aminopropyltrimethoxysilane, n-propyltrimethoxysilane and N-phenyl-3-aminopropyltrimethoxysilane.

### [Mixing Condition]

The temperature at the time of mixing, i.e. the reaction temperature is preferably 70°C or less, more preferably 50°C or less, and even more preferably 30°C or less, from the viewpoint of inhibiting the condensation reaction between silane compounds. In addition, the temperature is preferably -20°C or more, more preferably -10°C or more, and preferably -5°C or more, from the viewpoint of a yield of the modified cellulose fiber

The mixing time is preferably 0.1 hours or more, more preferably 0.5 hours or more, and even more preferably 1 hour or more, and the mixing time is preferably 120 hours or less, more preferably 72 hours or less, even more preferably 48 hours or less, and even more preferably 24 hours or less, from the viewpoint of productivity.

A solvent can be used during the mixing of Step 2. As the solvent, it is preferable to select a solvent that dissolves a compound used, including, for example, methanol, ethanol, isopropanol (IPA), N,N-dimethylformamide (DMF), dimethyl sulfoxide (DMSO), N,N-dimethylacetamide, tetrahydrofuran (THF), acetone, methyl ethyl ketone (MEK), cyclohexanone, ethyl acetate, acetonitrile, dichloromethane, chloroform, toluene, acetic acid, 1-methoxy-2-propanol (PGME), water and the like. These solvents can be used alone in a single kind or in a combination of two or more kinds.

Further, the dispersing treatment may be carried out by a high-pressure homogenizer or the like after completing the mixing to more evenly disperse each component in Step 2.

### (Blended Amount of Silane Compound)

The blended amount of the silane compound in Step 2 is 50 parts by mass or more, based on 100 parts by mass of the cellulose fiber bound with a modifying group. Here, the mass of the cellulose fiber bound with the modifying group is a mass of only a cellulose fiber moiety in the cellulose fiber bound with the modifying group, i.e. a mass of a cellulose fiber moiety obtained by excluding the modifying group from the cellulose fiber bound with the modifying group.

The blended amount of the silane compound is preferably 60 parts by mass or more, more preferably 70 parts by mass or more, and even more preferably 80 parts by mass or more, from the viewpoint of improving heat resistance of a resin during being blended into a resin, on the other hand, the blended amount of the silane compound is preferably 1000 parts by mass or less, more preferably 800 parts by mass or less, and even more preferably 500 parts by mass or less, from the viewpoint of cost.

### [Finely Pulverizing Step]

By finely pulverizing cellulose fibers in any of the steps of the production method of the present invention, the cellulose fibers of a micrometer scale can be finely pulverized to a size in a nanometer scale. Reducing an average fiber diameter to a nanometer size is preferable because dispersibility in the resin is improved.

As the finely pulverizing treatment, a known finely pulverizing treatment method can be adopted. For example, when modified cellulose fibers of which average fiber diameter is a nanometer size are obtained, a treatment method using a grinder such as Masscolloider, or a treatment method using a high-pressure homogenizer or the like in a medium may be carried out.

The specific examples of a medium or an apparatus used in the finely pulverizing treatment are described in paragraphs 0079 to 0080 of Japanese Patent Laid-Open No. 2022-001634.

### [Shortening Treatment]

In any of steps of the production method of the present invention, a shortening treatment of a cellulose fiber, i.e. a treatment to shorten a fiber length can be further carried out. The shortening treatment can be achieved by subjecting the cellulose fiber to be shortened to one or more treatment methods selected from the group consisting of known treatments, for example, an alkaline treatment, an acidic treatment, a heating treatment, a ultraviolet treatment, an electro beam treatment, a mechanical treatment and an enzymatic treatment.

### B. Production Method of Modified Cellulose Fiber Including Step 3 and Step 4

An additional embodiment of the production method of the modified cellulose fiber of the present invention is a method of producing a modified cellulose fiber including:
Step 3: mixing a cellulose fiber having an ionic group with one or more silane compounds selected from the group consisting of a chlorosilane compound, an alkoxy silane compound, an acetoxy silane compound and a silanol compound to obtain a cellulose fiber bound with a silane compound, and
Step 4: binding a modifying group other than a silanol group to an ionic group of the cellulose fiber bound with the silane compound to obtain a modified cellulose fiber,
wherein the blended amount of the silane compound in Step 3 is 50 parts by mass or more based on 100 parts by mass of a cellulose fiber moiety of the cellulose fiber having the ionic group.

### [Step 3]

Step 3 in the present invention is a step of mixing a cellulose fiber having an ionic group with the specified silane compound described above to obtain a cellulose fiber bound with a silane compound.

It is assumed that the mixing converts at least a part of a functional group of the silane compound to a silanol group, at least a part of the silanol group reacts with at least a part of the hydroxy groups of the cellulose fiber having ionic group, and the silane compound binds to the cellulose fiber. In addition, it is assumed that an ionic group in a cellulose fiber having the ionic group does not react with a silanol group.

### [Cellulose Fiber Having Ionic Group]

The main properties of "a cellulose fiber having an ionic group" subjected to Step 3 are same as those in the above embodiment A.

### [Preparation of Cellulose Fiber Having Ionic Group]

The preparation method of "a cellulose fiber having an ionic group" subjected to Step 3 is same as one in above embodiment A.

### [Silane Compound]

The "silane compound" subjected to Step 3 is same as one in the above embodiment A.

### [Mixing Condition]

The temperature at the time of the mixing, the mixing time and the solvent used during the mixing are same as those in the above Step 2. Further, a dispersion treatment using a high-pressure homogenizer or the like may be carried out after completing the mixing to more evenly disperse each component in Step 3.

### (Blended Amount of Silane Compound)

The blended amount of the silane compound in Step 3 is 50 parts by mass or more based on 100 parts by mass of the cellulose fiber having an ionic group. Here, a mass of the cellulose fiber having an ionic group is a mass of only a cellulose fiber moiety in the cellulose fiber having the ionic group, i.e. a mass of the cellulose fiber moiety in which the ionic group is removed from the cellulose fiber having the ionic group.

The blended amount of the silane compound is preferably 60 parts by mass or more, more preferably 70 parts by mass or more, and even more preferably 80 parts by mass or more, from the viewpoint of improving heat resistance of the resin during blending to the resin, on the other hand, the blended amount of the silane compound is preferably 1000 parts by mass or less, more preferably 800 parts by mass or less, and even more preferably 500 parts by mass or less, from the viewpoint of cost.

### [Cellulose Fiber Bound with Silane Compound]

The main properties of the cellulose fiber bound with a silane compound obtained in Step 3, for example, average fiber diameter and average fiber length are same as those of "cellulose fiber bound with the modifying group" obtained in the above Step 1.

### [Step 4]

Step 4 is a step of binding a modifying group other than a silanol group to an ionic group of the cellulose fiber bound with the silane compound to obtain a modified cellulose fiber.

The "modifying group other than a silanol group" which is introduced in Step 4 is same as one in the above embodiment A.

The "method of binding a modifying group other than a silanol group," "compound for modification," "amount thereof used," "mixing condition" upon binding, "binding amount and introduction ratio of a modifying group" and the like in Step 4 are same as those in the above embodiment A.

In any of steps of the production method of the present embodiment, a finely pulverizing treatment and/or a shortening treatment of a cellulose fiber can be carried out in the same manner as the above embodiment A.

### C. Modified Cellulose Fiber Produced by Production Method of Above Embodiment A or Embodiment B

An embodiment C of the present invention is a modified cellulose fiber produced by the production method of the above embodiment A or embodiment B.

As mentioned above, a modified cellulose fiber can be obtained by the production method including Step 1 and Step 2, or the production method including Step 3 and Step 4. At least a part of the modified cellulose fibers binds to the silane compound.

It is assumed that the mixing in Step 2 or Step 3 converts at least a part of a functional groups of the silane compound to a silanol group, at least a part of the silanol group reacts with at least a part of the hydroxy groups of the cellulose fiber bound with the modifying group or at least a part of the hydroxy groups of the cellulose fiber having the ionic group, and the silane compound binds to the cellulose fiber. Accordingly, the modified cellulose fiber produced by the production method of embodiment A or the production method of embodiment B has groups derived from the modifying group and the silane compound.

The preferred content of each component in the modified cellulose fiber of the present invention is as follows.

The content of the cellulose fiber, i.e. the amount of the cellulose fiber moiety in which the bound modifying group and the bound silane compound are removed is preferably 5% by mass or more, more preferably 10% by mass or more, and even more preferably 15% by mass or more, from the viewpoint of improving heat resistance of the resin, on the other hand, the content is preferably 90% by mass or less, more preferably 80% by mass or less, and even more preferably 70% by mass or less, from the same viewpoint.

The content of the silane compound is preferably 1% by mass or more, more preferably 5% by mass or more, and even more preferably 10% by mass or more, from the viewpoint of improving heat resistance of the resin, on the other hand, the content is preferably 80% by mass or less, more preferably 70% by mass or less, and even more preferably 60% by mass or less, from the same viewpoint.

The content of the modifying group is preferably 0.1% by mass or more, more preferably 1% by mass or more, and even more preferably 5% by mass or more, from the viewpoint of improving heat resistance of the resin, on the other hand, the content is preferably 80% by mass or less, more preferably 70% by mass or less, and even more preferably 60% by mass or less, from the same viewpoint.

Incidentally, the content of each component can be calculated from the blended amount of each component.

### D. Composition Containing Modified Cellulose Fiber

An embodiment D of the present invention is a composition containing a modified cellulose fiber. The composition of the present invention contains a modified cellulose fiber, and further may contain an organic solvent and/or a resin.

### [Organic Solvent]

As an organic solvent, it is preferred to select a solvent that dissolves the modified cellulose fiber or the silane compound. The organic solvent includes, for example, methanol, ethanol, isopropanol (IPA), N,N-dimethylformamide (DMF), dimethyl sulfoxide (DMSO), N,N-dimethylacetamide, tetrahydrofuran (THF), acetone, methyl ethyl ketone (MEK), cyclohexanone, ethyl acetate, acetonitrile, dichloromethane, chloroform, toluene, acetic acid, 1-methoxy-2-propanol (PGME) and the like. These solvents can be used alone in a single kind or in a combination of two or more kinds.

The preferred content of each component in the case where the composition of the present invention contains an organic solvent is as follows.

The content of the cellulose fiber in the composition of the present invention, i.e. the amount of the cellulose fiber moiety in which the bound modifying group and the bound silane compound are removed is preferably 0.1% by mass or more, more preferably 0.5% by mass or more, and even more preferably 1% by mass or more, from the viewpoint of improving heat resistance of the resin, on the other hand, the content is preferably 20% by mass or less, more preferably 10% by mass or less, and even more preferably 5% by mass or less, from the same viewpoint.

The content of the silane compound in the composition of the present invention, i.e. the total amount of the silane compound bound to the modified cellulose fiber and the silane compound not bound thereto is preferably 0.03% by mass or more, more preferably 0.15% by mass or more, and even more preferably 0.3% by mass or more, from the viewpoint of improving heat resistance of the resin, on the other hand, the content is preferably 40% by mass or less, more preferably 20% by mass or less, and even more preferably 10% by mass or less, from the same viewpoint.

The content of the modifying group in the composition of the present invention is preferably 0.02% by mass or more, more preferably 0.1% by mass or more, and even more preferably 0.2% by mass or more, from the viewpoint of improving heat resistance of the resin, on the other hand, the content is preferably 70% by mass or less, more preferably 35% by mass or less, and even more preferably 20% by mass or less, from the same viewpoint.

The content of the organic solvent in the composition of the present invention is preferably 1% by mass or more, more preferably 5% by mass or more, and even more preferably 10% by mass or more, on the other hand, the content is preferably 95% by mass or less, more preferably 90% by mass or less, even more preferably 80% by mass or less, even more preferably 60% by mass or less, and even more preferably 40% by mass or less.

Incidentally, the content of each component can be calculated from the blended amount of each component.

### [Resin]

The resin includes resins described in an embodiment F described below. The composition of the present invention may optionally contain a curing agent and a curing accelerator.

The content or the blended amount of the modified cellulose fiber in the composition of the present invention, more specifically the resin composition of the present invention is preferably 4.0% by mass or more, more preferably 5.0% by mass or more, and even more preferably 6.0% by mass or more, from the viewpoint of improving heat resistance of the resin, on the other hand, the content or the blended amount is preferably 20% by mass or less, more preferably 15% by mass or less, and even more preferably 10% by mass or less, from the same viewpoint.

The preferred content or blended amount of the each component is as follows, in the case where the composition of the present invention contains an organic solvent and a resin.

The content or blended amount of the cellulose fiber in the composition of the present invention, more specifically the resin composition of the present invention, i.e. the amount of the cellulose fiber moiety in which the bound modifying group and the bound silane compound are removed is preferably 0.1% by mass or more, more preferably 0.5% by mass or more, and even more preferably 1% by mass or more, from the viewpoint of improving heat resistance of the resin, on the other hand, the content or blended amount is preferably 20% by mass or less, more preferably 10% by mass or less, and even more preferably 5% by mass or less, from the same viewpoint.

The content or blended amount of the silane compound in the composition of the present invention, more specifically the resin composition of the present invention, i.e. the total amount of the silane compound bound to the modified cellulose fiber and the silane compound not bound to modified cellulose fiber is preferably 0.03% by mass or more, more preferably 0.15% by mass or more, and even more preferably 0.3% by mass or more, from the viewpoint of improving heat resistance of the resin, on the other hand, the content or blended amount is preferably 40% by mass or less, more preferably 20% by mass or less, and even more preferably 10% by mass or less, from the same viewpoint.

The content or blended amount of the modifying group in the composition of the present invention, more specifically the resin composition of the present invention is preferably 0.02% by mass or more, more preferably 0.1% by mass or more, and even more preferably 0.2% by mass or more, from the viewpoint of improving heat resistance of the resin, on the other hand, the content or blended amount is preferably 70% by mass or less, more preferably 35% by mass or less, and even more preferably 20% by mass or less, from the same viewpoint.

The content or blended amount of the organic solvent in the composition of the present invention, more specifically the resin composition of the present invention is preferably 1% by mass or more, more preferably 5% by mass or more, and even more preferably 10% by mass or more, on the other hand, the content or blended amount is preferably 49% by mass or less, more preferably 45% by mass or less, and even more preferably 40% by mass or less.

The content or blended amount of the resin in the composition of the present invention, more specifically the resin composition of the present invention is preferably 70% by mass or more, more preferably 75% by mass or more, and even more preferably 80% by mass or more, from the viewpoint of improving resin moldability, on the other hand, the content or blended amount is preferably 95% by mass or less, more preferably 94% by mass or less, and even more preferably 93% by mass or less, from the viewpoint of improving heat resistance of the resin.

Incidentally, the content of each component can be calculated from the blended amount of each component.

The mass ratio of the blended amount of the modified cellulose fiber to the blended amount of the resin in the composition of the present invention, more specifically the resin composition, i.e. blended amount of modified cellulose fiber / blended amount of resin is preferably 5/95 or more, more preferably 6/94 or more, and even more preferably 7/93 or more, from the viewpoint of improving heat resistance of the resin, on the other hand, the mass ratio is preferably 20/80 or less, more preferably 15/85 or less, and even more preferably 10/90 or less, from the same viewpoint.

The mass ratio of the blended amount of the cellulose fiber to the blended amount of the resin in the composition of the present invention, more specifically the resin composition, i.e. blended amount of cellulose fiber / blended amount of resin is preferably 0.1/99.9 or more, more preferably 0.5/99.5 or more, and even more preferably 1/99 or more, from the viewpoint of improving heat resistance of the resin, on the other hand, the mass ratio is preferably 20/80 or less, more preferably 10/90 or less, and even more preferably 5/95 or less, from the same viewpoint. Here, the blended amount of the cellulose fiber refers to a blended amount of a cellulose fiber moiety in which the bound modifying group and the bound silane compound are removed.

### [Other Components]

The composition may contain, for example, a plasticizer, a crystal nucleating agent, a filler (an inorganic filler and an organic filler), a hydrolysis inhibitor, a flame retardant, an antioxidant, a lubricant such as a hydrocarbon wax or an anionic surfactant, an ultraviolet absorbent, an antistatic agent, an anti-clouding agent, a photostabilizer, a pigment, a mildewproof agent, a bactericidal agent, a blowing agent, or a surfactant; a polysaccharide such as s starch or an alginic acid; a natural protein such as gelatin, glue, or casein; an inorganic compound such as tannin, zeolite, ceramics or metal powder; a perfume; a fluidity modulator; a leveling agent; an electroconductive agent; an ultraviolet dispersant; a deodorant; or the like, within the range not impairing the effect of the present invention. Further, other polymeric materials or other compositions can be added, within the range not impairing the effect of the present invention.

### E. Additive for Resin Containing Modified Cellulose Fiber Described in Above Embodiment C

The additive for resin of an embodiment E of the present invention contains a modified cellulose fiber described in the above embodiment C and further may contain an organic solvent.

The improvement of heat resistance or improvement of strength upon curing the resin is realized by adding the additive for resin of the present invention to the resin.

### [Organic Solvent]

It is preferred that the solvent described in the above embodiment D is selected as an organic solvent.

### [Composition]

The preferred content of each component in an additive for resin of the present invention is same as those in the above case where the above composition of the present invention contains an organic solvent.

Incidentally, the content of each component can be calculated from the blended amount of each component.

### [Other Components]

The additive for resin may contain, for example, a plasticizer, a crystal nucleating agent, a filler (an inorganic filler and an organic filler), a hydrolysis inhibitor, a flame retardant, an antioxidant, a lubricant such as a hydrocarbon wax or an anionic surfactant, an ultraviolet absorbent, an antistatic agent, an anti-clouding agent, a photo stabilizer, a pigment, a mildewproof agent, a bactericidal agent, a blowing agent, or a surfactant; a polysaccharide such as s starch or an alginic acid; a natural protein such as gelatin, glue, or casein; an inorganic compound such as tannin, zeolite, ceramics or metal powder; a perfume; a fluidity modulator; a leveling agent; an electroconductive agent; an ultraviolet dispersant; a deodorant; or the like, within the range not impairing the effect of the present invention. Further, other polymeric materials and other compositions can be added, within the range not impairing the effect of the present invention.

### F. Method of Producing Resin Composition Including Step 5 and Step 6

An embodiment of a method of producing a resin composition of the present invention is a method of producing a resin composition including:
Step 5: binding a modifying group other than a silanol group to an ionic group of a cellulose fiber having the ionic group to obtain a cellulose fiber bound with the modifying group, and
Step 6: mixing one or more silane compounds selected from the group consisting of a chlorosilane compound, an alkoxy silane compound, an acetoxy silane compound and a silanol compound, the cellulose fiber bound with the modifying group, and a resin,
wherein the blended amount of the silane compound in Step 6 is 50 parts by mass or more based on 100 parts by mass of the cellulose fiber moiety of the cellulose fiber bound with the modifying group.

### [Cellulose Fiber Having Ionic Group]

The main properties of the "cellulose fiber having an ionic group" subjected to Step 5 are same as those in the above embodiment A.

### [Preparation of Cellulose Fiber Having Ionic Group]

A method of preparing the "cellulose fiber having an ionic group" subjected to Step 5 is same as one in the above embodiment A.

### [Step 5]

Step 5 in the present invention is same as Step 1 in the above embodiment A.

### [Step 6]

Step 6 in the present invention is a step of mixing the specified silane compound, i.e. one or more silane compounds selected from the group consisting of a chlorosilane compound, an alkoxy silane compound, an acetoxy silane compound and a silanol compound, the cellulose fiber bound with the modifying group obtained in Step 5, and a resin.

It is assumed that the mixing converts at least a part of functional groups of the silane compound to a silanol group, at least a part of the silanol group reacts with at least a part of hydroxy groups of the cellulose fiber bound with the modifying group, and the silane compound binds to the cellulose fiber bound with the modifying group. Accordingly, the modified cellulose fiber obtained via Step 6 has groups derived from the modifying group and the silane compound.

### [Silane Compound]

The silane compound used in the step is same as one in the above embodiment A.

### [Resin]

The resin used in the step is preferably a curable resin, and the curable resin includes, for example, an urethane resin, a (met)acrylic resin, an epoxy resin, an urea resin, a melamine resin and a phenolic resin, and one or more selected from the group consisting of an urethane resin, a (met)acrylic resin and an epoxy resin are preferred.

When the curable resin is an urethane resin, a curable monomer includes an aromatic isocyanate such as tolylene diisocyanate and diphenyl methane diisocyanate; an aliphatic isocyanate such as hexamethylene diisocyanate, xylylene diisocyanate, isophorone diisocyanate and tetramethyl xylylene diisocyanate; and polyols such as ethylene glycol, diethylene glycol, butanediol, hexanediol, neopentyldiol, hydroxyethyl acrylate, trimethylol propane, dimethylol propionate, and isophoronediamine. The reactant of isocyanate and polyol becomes an urethane resin, but not limited thereto. An oligomer of the listed polyols, and polyols such as polyether polyol, polyester polyol and polycarbonate polyol may be used as a curable prepolymer.

When the curable resin is a (met)acrylic resin, the curable monomer includes mono(met)acrylate such as methyl acrylate, methyl methacrylate, ethyl acrylate, ethyl methacrylate, butyl acrylate, butyl methacrylate, n-hexyl acrylate, n-hexyl methacrylate, 2-ethylhexyl acrylate, 2-ethylhexyl metacrylate, nonanediol diacrylate, phenoxyethyl acrylate, (met)acrylate of a bisphenol A-alkylene oxide adduct, epoxy(met)acrylate (bisphenol A-type epoxy(met)acrylate, novolac-type epoxy(met)acrylate, or the like), polyester(met)acrylate (including aliphatic polyester-type (met)acrylate, aromatic polyester-type (met)acrylate, or the like), urethane(met)acrylate (polyester-type urethane(met)acrylate, polyether-type urethane(met)acrylate, or the like), silicone(met)acrylate, and cyanoacrylate. An oligomer of the listed mono(met)acrylate may be used as a curable prepolymer.

When the curable resin is an epoxy resin, the curable monomer includes, for example, a monomer such as a bisphenol A-type, a phenol novolac-type, a glycidyl ether-type, an alicyclic-type, a glycidyl amine-type, or a glycidyl ester-type. An oligomer of the listed monomer may be used as a curable prepolymer.

When the curable resin is an urea resin, the curable monomer includes urea and formaldehyde. When the curable resin is a melamine resin, the curable monomer includes melamine and formaldehyde. When the curable resin is a phenolic resin, the curable monomer includes phenol, cresol, xylenol, resorcinol and formaldehyde.

### [Curing Agent and Curing Accelerator]

When a thermosetting resin is used as a resin, a curing agent and/or a curing accelerator may be used.

The curing agent can be properly selected depending on the kinds of resins, and for example, the curing agent in the case where the resin is an epoxy resin includes, for example, an amine-based curing agent, a phenolic resin-based curing agent, an acid anhydride-based curing agent, a polymercaptan-based curing agent, a potential curing agent, including a boron trifluoride-amine complex, a dicyandiamide, or a hydrazide carbonate, and the like. The curing agent may be used alone or in combination of two or more kinds. Incidentally, the curing agent may act as a curing accelerator.

The proportion of the curing agent can be properly selected depending on the kinds of the curing agent and the like, and the proportion is, for example, preferably from 0.1 to 300 parts by mass based on 100 parts by mass of the resin.

The curing accelerator can also be properly selected depending on the kinds of the resin, and the curing accelerator in the case where the resin is an epoxy resin includes, for example, phosphines, amines, and the like. The curing accelerator may be used alone or in combination of two or more kinds.

The proportion of the curing accelerator can be properly selected depending on the kinds of the curing agent and the like, and the proportion is, for example, preferably from 0.01 to 100 parts by mass based on 100 parts by mass of the resin.

### [Mixing Condition]

The temperature at the time of mixing, the mixing time and the solvent used during the mixing are same as those in the above Step 2. In Step 6, the silane compound, the cellulose fiber bound with a modifying group and the resin may be simultaneously mixed, or two components may be mixed and thereafter the remaining component may be mixed therewith. For example, a cellulose fiber bound with a modifying group may be previously mixed with a resin, and thereafter a silane compound may be added to the mixture and mixed. Further, the dispersing treatment may be carried out by a high-pressure homogenizer or the like after completing the mixing to more evenly disperse each component in Step 6.

### (Blended Amount of Silane Compound)

The blended amount of the silane compound in Step 6 is 50 parts by mass or more based on 100 parts by mass of the cellulose fiber bound with the modifying group. Here, the mass of the cellulose fiber bound with the modifying group refers to a mass of only a cellulose fiber moiety in the cellulose fiber bound with the modifying group, i.e. a mass of a cellulose fiber moiety in which the modifying group is removed from the cellulose fiber bound with the modifying group.

The blended amount of the silane compound is preferably 60 parts by mass or more, more preferably 70 parts by mass or more, and even more preferably 80 parts by mass or more, from the viewpoint of improving heat resistance of the resin during blending a resin, on the other hand, the blended amount of the silane compound is preferably 1000 parts by mass or less, more preferably 800 parts by mass or less, and even more preferably 500 parts by mass or less, from the viewpoint of cost.

### (Blended Amount of Resin)

The blended amount of the resin in Step 6 is preferably 1000 parts by mass or more, more preferably 2000 parts by mass or more, and even more preferably 5000 parts by mass or more based on 100 parts by mass of the cellulose fiber bound with the modifying group, from the viewpoint of improving resin moldability, on the other hand, the blended amount of the resin is preferably 100000 parts by mass or less, more preferably 50000 parts by mass or less, and even more preferably 10000 parts by mass or less, from the viewpoint of improving heat resistance. Here, the mass of the cellulose fiber bound with the modifying group refers to a mass of only a cellulose fiber moiety in the cellulose fiber bound with the modifying group, i.e. a mass of a cellulose fiber moiety in which the modifying group is removed from the cellulose fiber bound with the modifying group.

### [Finely Pulverizing Step and Shortening Treatment]

In any of steps of the production method of the present invention, a finely pulverizing step of a cellulose fiber and/or a shortening treatment of a cellulose fiber can be carried out in the same manner as those in the above embodiment A.

### G. Metho of Producing Resin Composition Including Step 7 and Step 8

Further embodiment of the method of producing the resin composition of the present invention is a method of producing a resin composition including:
Step 7: mixing a cellulose fiber having an ionic group with one or more silane compounds selected from the group consisting of a chlorosilane compound, an alkoxy silane compound, an acetoxy silane compound and a silanol compound to obtain a cellulose fiber bound with a silane compound, and
Step 8: binding a modifying group other than a silanol group to an ionic group of the cellulose fiber bound with the silane compound to obtain a modified cellulose fiber,
wherein, the blended amount of the silane compound in Step 7 is 50 parts by mass or more based on 100 parts by mass of a cellulose fiber moiety of the cellulose fiber having the ionic group.

### [Cellulose Fiber Having Ionic Group]

The main properties of "a cellulose fiber having an ionic group" subjected to Step 7 are same as those in the above embodiment A.

### [Preparation of Cellulose Fiber Having Ionic Group]

The method of preparing "a cellulose fiber having an ionic group" subjected to Step 7 is same as one in the above embodiment A.

### [Step 7]

Step 7 in the present invention is same as Step 3 in the above embodiment B.

It is assumed that the mixing converts at least a part of functional groups of the silane compound to a silanol group, at least a part of the silanol group reacts with at least a part of the hydroxy group of the cellulose fiber having an ionic group, and the silane compound binds to the cellulose fiber.

### [Silane Compound]

The silane compound used in the step is same as one in the above embodiment A.

### (Blended Amount of Silane Compound)

The blended amount of the silane compound in Step 7 is 50 parts by mass or more based on 100 parts by mass of the cellulose fiber having the ionic group. Here, the mass of the cellulose fiber having the ionic group refers to a mass of only a cellulose fiber moiety in the cellulose fiber having the ionic group, i.e. a mass of a cellulose fiber moiety in which the ionic group is removed from the cellulose fiber having the ionic group.

The blended amount of the silane compound is preferably 60 parts by mass or more, more preferably 70 parts by mass or more, and even more preferably 80 parts by mass or more, from the viewpoint of improving heat resistance of the resin composition or the resin molded product, on the other hand, the blended amount of the silane compound is preferably 1000 parts by mass or less, more preferably 800 parts by mass or less, and even more preferably 500 parts by mass or less, from the viewpoint of cost.

### [Step 8]

Step 7 in the present invention is same as Step 4 in the above embodiment B.

### [Resin]

The resin, the curing agent and the curing accelerator used in embodiment G are same as those used in Step 6 of the above embodiment F.

In embodiment G, the resin may be blended in Step 7 or may be blended in Step 8.

When blending the resin in Step 7, the temperature at the time of the mixing, the mixing time and the solvent used during the mixing are same as those in the above Step 6.

### (Blended Amount of Resin)

The blended amount of the resin in the blending of the resin in Step 7 is preferably 1000 parts by mass or more, more preferably 2000 parts by mass or more, and even more preferably 5000 parts by mass or more based on 100 parts by mass of the cellulose fiber having an ionic group, from the viewpoint of improving resin moldability, on the other hand, the blended amount of the resin is preferably 100000 parts by mass or less, more preferably 50000 parts by mass or less, and even more preferably 10000 parts by mass or less, from the viewpoint of improving heat resistance. Here, the mass of the cellulose fiber having the ionic group refers to a mass of only a cellulose fiber moiety in the cellulose fiber having an ionic group, i.e. a mass of a cellulose fiber moiety in which the ionic group is removed from the cellulose fiber having the ionic group.

### [Finely Pulverizing Step and Shortening Treatment]

In any of steps of the production method of the present invention, a finely pulverizing step of a cellulose fiber and/or a shortening treatment of a cellulose fiber can be carried out in the same manner as those in the above embodiment A.

### H. Resin Composition

The resin composition of the present invention is a resin composition obtained by blending
a modified cellulose fiber binding a cellulose fiber bound with a modifying group other than a silanol group and a silane compound, and a resin.

The preferred example of the silane compound in the resin composition of the present invention is one or more silane compounds selected from the group consisting of a chlorosilane compound, an alkoxy silane compound, an acetoxy silane compound and a silanol compound, and more specifically, the silane compound includes a silane compound listed in the section "Step 2" described above.

The blended amount of the silane compound in the resin composition of the present invention is preferably 50 parts by mass or more based on 100 parts by mass of a cellulose fiber moiety of the cellulose fiber bound with the modifying group other than the silanol group, from the viewpoint of improving heat resistance of the resin composition or the resin molded product. More specifically, the blended amount of the silane compound is preferably 60 parts by mass or more, more preferably 70 parts by mass or more, and even more preferably 80 parts by mass or more, from the same viewpoint, on the other hand, the blended amount of the silane compound is preferably 1000 parts by mass or less, more preferably 800 parts by mass or less, and even more preferably 500 parts by mass or less, from the viewpoint of cost.

Additionally, the details of the modified cellulose fiber or the resin, the blended amount of each component constituting a resin composition, and the like are as described in the above sections A to D.

The resin composition of the present invention, for example, can be produced by the production method of the above embodiment F or embodiment G.

The resin composition produced by the production method of the above embodiment F or embodiment G contains a modified cellulose fiber and a resin. The resin composition may or may not contain a solvent. At least a part of the modified cellulose fiber binds to the silane compound. Further, an unreacted product of the silane compound or an oligomer thereof may be present in the resin composition.

The preferred content of each component in the resin composition produced by the production method of the above embodiment F or embodiment G is as follows.

The content of the cellulose fiber in the resin composition, i.e. an amount of a cellulose fiber moiety in which the bound modifying group and the bound silane compound are excluded is preferably 0.1% by mass or more, more preferably 0.5% by mass or more, and even more preferably 1% by mass or more, from the viewpoint of improving heat resistance of the resin, on the other hand, the content is preferably 20% by mass or less, more preferably 10% by mass or less, and even more preferably 5% by mass or less, from the same viewpoint.

The content of the silane compound in the resin composition, i.e. a total amount of the silane compound bound to the modified cellulose fiber and the silane compound not bound to the modified cellulose fiber is preferably 0.03% by mass or more, more preferably 0.15% by mass or more, and even more preferably 0.3% by mass or more, from the viewpoint of improving heat resistance of the resin, on the other hand, the content is preferably 40% by mass or less, more preferably 20% by mass or less, and even more preferably 10% by mass or less, from the same viewpoint.

The content of the modifying group in the resin composition is preferably 0.02% by mass or more, more preferably 0.1% by mass or more, and even more preferably 0.2% by mass or more, from the viewpoint of improving heat resistance of the resin, on the other hand, the content is preferably 70% by mass or less, more preferably 35% by mass or less, and even more preferably 20% by mass or less, from the same viewpoint.

The content of the resin in the resin composition is preferably 70% by mass or more, more preferably 75% by mass or more, and even more preferably 80% by mass or more, from the viewpoint of improving resin moldability, on the other hand, the content is preferably 95% by mass or less, more preferably 94% by mass or less, and even more preferably 93% by mass or less, from the viewpoint of improving heat resistance of the resin.

Incidentally, the content of each component can be calculated from the blended amount of each component.

The resin composition may or may not contain a solvent.

The preferred content of each component in the case where the resin composition contains a solvent and a resin is as follows.

The content of the cellulose fiber in the resin composition, i.e. an amount of a cellulose fiber moiety in which the bound modifying group and the bound silane compound are excluded is preferably 0.1% by mass or more, more preferably 0.5% by mass or more, and even more preferably 1% by mass or more, from the viewpoint of improving heat resistance of the resin, on the other hand, the content is preferably 20% by mass or less, more preferably 10% by mass or less, and even more preferably 5% by mass or less, from the same viewpoint.

The content of the silane compound in the resin composition, i.e. a total amount of the silane compound bound to the modified cellulose fiber and the silane compound not bound to the modified cellulose fiber is preferably 0.03% by mass or more, more preferably 0.15% by mass or more, and even more preferably 0.3% by mass or more, from the viewpoint of improving heat resistance of the resin, on the other hand, the content is preferably 40% by mass or less, more preferably 20% by mass or less, and even more preferably 10% by mass or less, from the same viewpoint.

The content of the modifying group in the resin composition is preferably 0.02% by mass or more, more preferably 0.1% by mass or more, and even more preferably 0.2% by mass or more, from the viewpoint of improving heat resistance of the resin, on the other hand, the content is preferably 70% by mass or less, more preferably 35% by mass or less, and even more preferably 20% by mass or less, from the same viewpoint.

The content of the solvent in the resin composition is preferably 1% by mass or more, more preferably 5% by mass or more, and even more preferably 10% by mass or more, on the other hand, the content is preferably 49% by mass or less, more preferably 45% by mass or less, and even more preferably 40% by mass or less.

The content of the resin in the resin composition is preferably 70% by mass or more, more preferably 75% by mass or more, and even more preferably 80% by mass or more, from the viewpoint of improving moldability of the resin, on the other hand, the content is preferably 95% by mass or less, more preferably 94% by mass or less, and even more preferably 93% by mass or less, from the viewpoint of improving heat resistance of the resin.

Incidentally, the content of each component can be calculated from the blended amount of each component.

The solvent which may be used herein preferably includes, for example, methanol, ethanol, isopropanol (IPA), N,N-dimethylformamide (DMF), dimethyl sulfoxide (DMSO), N,N-dimethylacetamide, tetrahydrofuran (THF), acetone, methyl ethyl ketone (MEK), cyclohexanone, ethyl acetate, acetonitrile, dichloromethane, chloroform, toluene, acetic acid, 1-methoxy-2-propanol (PGME), water and the like. These solvents can be used alone in a single kind or in a combination of two or more kinds.

### [Other Components]

The resin composition may contain, for example, a plasticizer, a crystal nucleating agent, a filler (an inorganic filler and an organic filler), a hydrolysis inhibitor, a flame retardant, an antioxidant, a lubricant such as a hydrocarbon wax or an anionic surfactant, an ultraviolet absorbent, an antistatic agent, an anti-clouding agent, a photo stabilizer, a pigment, a mildewproof agent, a bactericidal agent, a blowing agent, or a surfactant; a polysaccharide such as a starch or an alginic acid; a natural protein such as gelatin, glue, or casein; an inorganic compound such as tannin, zeolite, ceramics or metal powder; a perfume; a fluidity modulator; a leveling agent; an electroconductive agent; an ultraviolet dispersant; a deodorant; or the like, within the range not impairing the effect of the present invention. Further, other polymeric materials and other compositions can be added, within the range not impairing the effect of the present invention.

### [Resin Molded Product]

A cured product such as a painted film in which the resin composition is cured and a resin molded product obtained by molding the cured product can be produced. The resin molded product can be produced by properly using known molding methods such as a coating molding, an extrusion molding, an injection molding, a press molding, a casting molding or a solvent cast method. Among these known molding methods, a coating molding and a casting molding are preferred, from the viewpoint of productivity.

The preferred content of each component in the resin molded product is as follows.

The content of the cellulose fiber in the resin molded product, i.e. an amount of cellulose fiber moiety in which the bound modifying group and the bound silane compound are removed is preferably 0.1% by mass or more, more preferably 0.5% by mass or more, and even more preferably 1% by mass or more, from the viewpoint of improving heat resistance of the resin, on the other hand, the content is preferably 20% by mass or less, more preferably 10% by mass or less, and even more preferably 5% by mass or less, from the same viewpoint.

The content of the silane compound in the resin molded product, i.e. a total amount of the silane compound bound to the modified cellulose fiber and the silane compound not bound to the modified cellulose fiber is preferably 0.03% by mass or more, more preferably 0.15% by mass or more, and even more preferably 0.3% by mass or more, from the viewpoint of improving heat resistance of the resin, on the other hand, the content is preferably 40% by mass or less, more preferably 20% by mass or less, and even more preferably 10% by mass or less, from the same viewpoint.

The content of the modifying group in the resin molded product is preferably 0.02% by mass or more, more preferably 0.1% by mass or more, and even more preferably 0.2% by mass or more, from the viewpoint of improving heat resistance of the resin, on the other hand, the content is preferably 70% by mass or less, more preferably 35% by mass or less, and even more preferably 20% by mass or less, from the same viewpoint.

The content of the resin in the resin molded product is preferably 70% by mass or more, more preferably 75% by mass or more, and even more preferably 80% by mass or more, from the viewpoint of improving resin moldability, on the other hand, the content is preferably 99% by mass or less, more preferably 95% by mass or less, even more preferably 94% by mass or less, even more preferably 93% by mass or less, even more preferably 90% by mass or less, even more preferably 80% by mass or less, and even more preferably 70% by mass or less, from the viewpoint of improving heat resistance of the resin.

Incidentally, the content of each component can be calculated from the blended amount of each component.

### I. Application of Present Invention

A modified cellulose fiber obtained by the production method of the present invention, a composition containing the modified cellulose fiber, an additive for resin, and a resin composition obtained by the production method of the present invention can be suitably used in the following fields. A semiconductor application, specifically, a photoresist, a buffer coat film, a rewiring material, a back-grind tape, a dicing tape, a die-bonding film, an epoxy encapsulant, a film-shaped sealant, an underfill, a mold underfill, a CMP pad, a printed wiring board material, and the like. A display application, specifically, a polarizer protection film, a surface-processing film, a backlight film, a QD sheet, a protect film, a transparent conductive film, a cover sheet, a backboard, a foldable cover sheet, a retardation film for circular polarizer, an OLED substrate, an OLED sealant, an OLED bank material, and the like. An onboard application, specifically, a mmWave radar compatible decorative material, a LiDAR interference filter, an automotive lens, an automotive OCA/OCR, an interlayer film, a connector terminal, an insulating sheet for motor, and the like. A passive component application, specifically, an aluminum electrolytic capacitor, a film capacitor, a multilayer ceramic capacitor, an inductor, a varistor, and the like. An electromagnetic wave material application, specifically, an electromagnetic wave shield, a noise suppression shield, and the like. An optical material application, specifically, a dimming glass/film, a projector screen film, a graphite sheet, a LED phosphor material, an optical fiber, and the like. A heat dissipation material application, specifically, a heat dissipation metal, a heat dissipation resin substrate, a heat dissipation sheet, a phase change sheet, a thermal grease, a thermal gap filler, a heat dissipation adhesive, and the like. A transportation equipment material application, specifically, exterior parts, engine parts, a construction material for an automobile, train, ship and airplane, and the like.

With respect to the above-mentioned embodiments, the present invention further discloses a resin composition, a resin molded product, a method of producing a modified cellulose fiber, and a method of producing a resin composition and a modified cellulose fiber mentioned hereinbelow.
<1> A resin composition obtained by blending
   a modified cellulose fiber binding a cellulose fiber bound with a modifying group other than a silanol group and a silane compound, and
   a resin.
<2> The resin composition of the above <1>, wherein the modifying group other than the silanol group is bound to the cellulose fiber via an ionic bond and/or a covalent bond.
<3> The resin composition of the above <1> or <2>, wherein the modifying group other than the silanol group is a hydrocarbon group and/or a polymer group.
<4> The resin composition of any one of the above <1> to <3>, wherein the modifying group other than the silanol group is a hydrocarbon group, of which the number of the carbon atom is 1 or more, preferably 3 or more, more preferably 8 or more, and even more preferably 10 or more, on the other hand, preferably 30 or less, more preferably 22 or less, and even more preferably 18 or less.
<5> The resin composition of any one of the above <1> to <4>, wherein the modifying group other than the silanol group is a polymer group, of which the molecular weight is preferably 100 or more, more preferably 200 or more, more preferably 300 or more, more preferably 400 or more, even more preferably 600 or more, even more preferably 1,000 or more, and even more preferably 1,500 or more, on the other hand, preferably 10,000 or less, more preferably 7,000 or less, even more preferably 5,000 or less, even more preferably 4,000 or less, even more preferably 3,500 or less, and even more preferably 2,500 or less.
<6> The resin composition of any one of the above <1> to <5>, wherein the modifying group other than the silanol group is preferably a functional group having a repeating structure connected by a structure having an oxygen atom, more preferably a functional group having a repeating structure connected by an oxygen atom such as a polyoxyalkylene structure (alkylene oxide chain) and a polysiloxane structure (silicone chain), even more preferably a functional group having a polyoxyalkylene structure, and even more preferably a polymer group which is an alkoxypolyoxyalkylene group.
<7> The resin composition of any one of the above <1> to <6>, wherein the content or blended amount of the modified cellulose fiber is preferably 4.0% by mass or more, more preferably 5.0% by mass or more, and even more preferably 6.0% by mass or more, on the other hand, preferably 20% by mass or less, more preferably 15% by mass or less, and even more preferably 10% by mass or less in the resin composition.
<8> The resin composition of any one of the above <1> to <7>, wherein the content or blended amount of the cellulose fiber is preferably 0.1% by mass or more, more preferably 0.5% by mass or more, and even more preferably 1% by mass or more, on the other hand, preferably 20% by mass or less, more preferably 10% by mass or less, and even more preferably 5% by mass or less in the resin composition.
<9> The resin composition of any one of the above <1> to <8>, wherein a mass ratio of the blended amount of the modified cellulose fiber to the blended amount of the resin (the blended amount of the modified cellulose fiber / the blended amount of the resin) is preferably 5/95 or more, more preferably 6/94 or more, and even more preferably 7/93 or more, on the other hand, preferably 20/80 or less, more preferably 15/85 or less, and even more preferably 10/90 or less in the resin composition.
<10> The resin composition of any one of the above <1> to <9>, wherein a mass ratio of the blended amount of the cellulose fiber to the blended amount of the resin (the blended amount of the cellulose fiber / the blended amount of the resin) is preferably 0.1/99.9 or more, more preferably 0.5/99.5 or more, and even more preferably 1/99 or more, on the other hand, preferably 20/80 or less, more preferably 10/90 or less, and even more preferably 5/95 or less in the resin composition.
<11> The resin composition of any one of the above <1> to <10>, wherein the content of the resin is preferably 70% by mass or more, more preferably 75% by mass or more, and even more preferably 80% by mass or more, on the other hand, preferably 95% by mass or less, more preferably 94% by mass or less, and even more preferably 93% by mass or less in the resin composition.
<12> The resin composition of any one of the above <1> to <11>, wherein the content or blended amount of the modified cellulose fiber is preferably 4.0% by mass or more, more preferably 5.0% by mass or more, and even more preferably 6.0% by mass or more, on the other hand, preferably 20% by mass or less, more preferably 15% by mass or less, and even more preferably 10% by mass or less in the resin composition, the content or blended amount of the cellulose fiber is preferably 0.1% by mass or more, more preferably 0.5% by mass or more, and even more preferably 1% by mass or more, on the other hand, preferably 20% by mass or less, more preferably 10% by mass or less, and even more preferably 5% by mass or less in the resin composition, the mass ratio of the blended amount of the modified cellulose fiber to the blended amount of the resin (the blended amount of the modified cellulose fiber / the blended amount of the resin) is preferably 5/95 or more, more preferably 6/94 or more, and even more preferably 7/93 or more, on the other hand, preferably 20/80 or less, more preferably 15/85 or less, and even more preferably 10/90 or less in the resin composition, the mass ratio the blended amount of the cellulose fiber to the blended amount of the resin (the blended amount of the cellulose fiber / the blended amount of the resin) is preferably 0.1/99.9 or more, more preferably 0.5/99.5 or more, and even more preferably 1/99 or more, on the other hand, preferably 20/80 or less, more preferably 10/90 or less, and even more preferably 5/95 or less in the resin composition, and the content of the resin is preferably 70% by mass or more, more preferably 75% by mass or more, and even more preferably 80% by mass or more, on the other hand, preferably 95% by mass or less, more preferably 94% by mass or less, and even more preferably 93% by mass or less in the resin composition.
<13> The resin composition of any one of the above <1> to <12>, wherein the modifying group other than the silanol group is a functional group having preferably one or more oxyalkylene (co-)polymer structures selected from oxyalkylene having 2 or more carbon atoms and 8 or less carbon atoms, more preferably one or more oxyalkylene (co-)polymer structures selected from oxyalkylene having 2 or more carbon atoms and 4 or less carbon atoms, even more preferably one or more oxyalkylene (co-)polymer structures selected from ethylene oxide (EO) and propylene oxide (PO), and even more preferably a polyoxyalkylene structure having a (co-)polymer structure in which ethylene oxide (EO) and propylene oxide (PO) are polymerized in random or block form (also referred to as (EO/PO) structure).
<14> A method of producing a modified cellulose fiber including:
   Step 1: binding a modifying group other than a silanol group to an ionic group of a cellulose fiber having the ionic group to obtain a cellulose fiber bound with the modifying group, and
   Step 2: mixing the cellulose fiber bound with the modifying group with one or more silane compounds selected from the group consisting of a chlorosilane compound, an alkoxy silane compound, an acetoxy silane compound and a silanol compound,
   wherein the blended amount of the silane compound in Step 2 is 50 parts by mass or more, based on 100 parts by mass of a cellulose fiber moiety of the cellulose fiber bound with the modifying group.
<15> A method of producing a modified cellulose fiber including:
   Step 3: mixing a cellulose fiber having an ionic group with one or more silane compounds selected from the group consisting of a chlorosilane compound, an alkoxy silane compound, an acetoxy silane compound and a silanol compound to obtain a cellulose fiber bound with a silane compound, and
   Step 4: binding a modifying group other than a silanol group to an ionic group of the cellulose fiber bound with the silane compound to obtain a modified cellulose fiber,
   wherein the blended amount of the silane compound in Step 3 is 50 parts by mass or more, based on 100 parts by mass of a cellulose fiber moiety of the cellulose fiber having the ionic group.
<16> A method of producing a resin composition including:
   Step 5: binding a modifying group other than a silanol group to an ionic group of a cellulose fiber having the ionic group to obtain a cellulose fiber bound with the modifying group, and
   Step 6: mixing one or more silane compounds selected from the group consisting of a chlorosilane compound, an alkoxy silane compound, an acetoxy silane compound and a silanol compound, the cellulose fiber bound with the modifying group and a resin,
   wherein the blended amount of the silane compound in Step 6 is 50 parts by mass or more, based on 100 parts by mass of a cellulose fiber moiety of the cellulose fiber bound with the modifying group.
<17> A method of producing a resin composition including:
   Step 7: mixing a cellulose fiber having an ionic group with one or more silane compounds selected from the group consisting of a chlorosilane compound, an alkoxy silane compound, an acetoxy silane compound and a silanol compound to obtain a cellulose fiber bound with a silane compound, and
   Step 8: bunding a modifying group other than a silanol group to an ionic group of the cellulose fiber bound with the silane compound to obtain a modified cellulose fiber,
   wherein the blended amount of the silane compound in Step 7 is 50 parts by mass or more, based on 100 parts by mass of a cellulose fiber moiety of the cellulose fiber having the ionic group.
<18> The production method of a modified cellulose fiber or the production method of a resin composition of any one of the above <14> to <17>, wherein the modifying group other than the silanol group is bound to a cellulose fiber via an ionic bond and/or a covalent bond.
<19> The production method of a modified cellulose fiber or the production method of a resin composition of any one of the above <14> to <18>, wherein the modifying group other than the silanol group is a hydrocarbon group and/or a polymer group.
<20> The production method of a modified cellulose fiber or the production method of a resin composition of any one of the above <14> to <19>, wherein the modifying group other than the silanol group is a hydrocarbon group, of which the number of the carbon atom is 1 or more, preferably 3 or more, more preferably 8 or more, and even more preferably 10 or more, on the other hand, preferably 30 or less, more preferably 22 or less, and even more preferably 18 or less.
<21> The production method of a modified cellulose fiber or the production method of a resin composition of any one of the above <14> to <20>, wherein the modifying group other than the silanol group is a polymer group, of which the molecular weight is preferably 100 or more, more preferably 200 or more, more preferably 300 or more, more preferably 400 or more, even more preferably 600 or more, even more preferably 1,000 or more, and even more preferably 1,500 or more, on the other hand, preferably 10,000 or less, more preferably 7,000 or less, even more preferably 5,000 or less, even more preferably 4,000 or less, even more preferably 3,500 or less, and even more preferably 2,500 or less.
<22> The production method of a modified cellulose fiber or the production method of a resin composition of any one of the above <14> to <21>, wherein the modifying group other than the silanol group is preferably a functional group having a repeating structure connected by a structure having an oxygen atom, more preferably a functional group having a repeating structure connected by an oxygen atom such as a polyoxyalkylene structure (alkylene oxide chain) and a polysiloxane structure (silicone chain), even more preferably a functional group having a polyoxyalkylene structure, and even more preferably a polymer group which is an alkoxypolyoxyalkylene group.
<23> The production method of a modified cellulose fiber or the production method of a resin composition of any one of the above <14> to <22>, wherein the modifying group other than the silanol group is a functional group having preferably one or more oxyalkylene (co-)polymer structures selected from oxyalkylene having 2 or more carbon atoms and 8 or less carbon atoms, more preferably one or more oxyalkylene (co-)polymer structures selected from oxyalkylene having 2 or more carbon atoms and 4 or less carbon atoms, even more preferably one or more oxyalkylene (co-)polymer structures selected from ethylene oxide (EO) and propylene oxide (PO), and even more preferably a polyoxyalkylene structure having a (co-)polymer structure in which ethylene oxide (EO) and propylene oxide (PO) are polymerized in random or block form (also referred to as (EO/PO) structure).
<24> The production method of a modified cellulose fiber or the production method of a resin composition of any one of the above <14> to <23>, wherein the compound for modification is preferably a compound having a modifying group and a cationic group, and even more preferably a compound having a modifying group and an amino group or a quaternary ammonium.
<25> The production method of a modified cellulose fiber or the production method of a resin composition of any one of the above <14> to <24>, wherein the amount of the compound for modification used in Step 1 is preferably 0.10 equivalence or more, more preferably 0.15 equivalence or more, and even more preferably 0.2 equivalence or more, on the other hand, preferably 20 equivalence or less, more preferably 5 equivalence or less, even more preferably 1 equivalence or less, and even more preferably 0.7 equivalence or less.
<26> The production method of a modified cellulose fiber or the production method of a resin composition of any one of the above <14> to <25>, wherein crystallinity of the cellulose fiber having the ionic group is preferably 10% or more, more preferably 15% or more, even more preferably 20% or more, even more preferably 30% or more, even more preferably 40% or more, and even more preferably 50% or more, on the other hand, preferably 90% or less, more preferably 85% or less, and even more preferably 80% or less.
<27> The production method of a modified cellulose fiber or the production method of a resin composition of any one of the above <14> to <26>, wherein the average fiber diameter of the cellulose fiber bound with the modifying group is preferably 1 nm or more, and more preferably 2 nm or more, on the other hand, preferably 300 nm or less, more preferably 200 nm or less, even more preferably 150 nm or less, and even more preferably 120 nm or less.
<28> The production method of a modified cellulose fiber or the production method of a resin composition of any one of the above <14> to <27>, wherein the average fiber length of the cellulose fiber bound with the modifying group is preferably 10 nm or more, more preferably 30 nm or more, and even more preferably 50 nm or more, on the other hand, preferably 1000 nm or less, more preferably 500 nm or less, and even more preferably 300 nm or less.
<29> The production method of a modified cellulose fiber or the production method of a resin composition of any one of the above <14> to <28>, wherein the binding amount of the modifying group in the cellulose fiber bound with the modifying group is preferably 0.01 mmol/g or more, on the other hand, preferably 3.0 mmol/g or less.
<30> The production method of a modified cellulose fiber or the production method of a resin composition of any one of the above <14> to <29>, wherein the temperature at the time of the mixing, i.e. a reaction temperature is preferably 70°C or less, more preferably 50°C or less, and even more preferably 30°C or less, on the other hand, preferably -20°C or more, more preferably -10°C or more, and preferably -5°C or more.
<31> The production method of a modified cellulose fiber or the production method of a resin composition of any one of the above <14> to <30>, wherein the mixing time is preferably 0.1 hours or more, more preferably 0.5 hours or more, and even more preferably 1 hour or more, on the other hand, preferably 120 hours or less, more preferably 72 hours or less, even more preferably 48 hours or less, and even more preferably 24 hours or less.
<32> The production method of a modified cellulose fiber or the production method of a resin composition of any one of the above <14> to <31>, wherein the blended amount of the silane compound is preferably 60 parts by mass or more, more preferably 70 parts by mass or more, and even more preferably 80 parts by mass or more, on the other hand, preferably 1000 parts by mass or less, more preferably 800 parts by mass or less, and even more preferably 500 parts by mass or less.
<33> A modified cellulose fiber produced by a production method of a modified cellulose fiber of any one of the above <14> to <32>.
<34> A resin molded product containing a resin composition of any one of the above <1> to <13>.

### EXAMPLES

Hereinafter, the present invention will be described more specifically by showing Examples and the like. Here, the following Examples are mere exemplifications of the present invention, without intending to limit the present invention thereto. Here, "ambient pressure" shows 101.3 kPa, and "room temperature" shows 25°C.

### [Average Fiber Diameter and Average Fiber Length of (Shortened) Anionically Modified Cellulose Fiber]

Deionized water was added to cellulose fibers to be measured or suspension containing the cellulose fibers to be measured, to prepare a dispersion, a content of which is 0.01% by mass. The dispersion was measured with a wet-dispersion type image analysis particle counter manufactured by JASCO International Co., Ltd. under the trade name of IF-3200, under the conditions of a front lens: 2 folds, a telecentric zoom lens: 1 fold, image resolution: 0.835 µm/pixel, a syringe inner diameter: 6515 µm, a spacer thickness: 500 µm, image recognition mode: ghost, a threshold value: 8, an amount of analytical sample: 1 mL, and sampling: 15%. Moreover, the length of a short axis was defined as a fiber diameter and the length of a long axis was defined as a fiber length during approximating the cellulose fiber to a rectangle, and one hundred cellulose fibers were measured, and an average was calculated.

### [Average Fiber Diameter and Average Fiber Length of Cellulose Fiber After Finely Pulverizing Treatment]

Deionized water was added to the cellulose fibers to be measured or suspension containing the cellulose fibers to be measured, to prepare a dispersion, a content of which is 1% by mass. The dispersion was adjusted to pH = 9 with sodium hydroxide, and then subjected to a dispersion treatment 5 times with a high-pressure homogenizer NanoVater L-ES, manufactured by YOSHIDA KIKAI CO., LTD. at 150 MPa. Deionized water was added to the dispersion so that the content of the cellulose fibers in the dispersion was 0.01% by mass. The dispersion was added dropwise on mica (mica), and dried by removing water droplet with air to provide an observation sample. The measurement was carried out with an atomic force microscope (AFM), AFM-5100N, manufactured by Hitachi High-Tech Science Corporation, a probe used being SI-DF20P2 manufactured by Hitachi High-Tech Science Corporation, in a dynamic force mode. During that measurement, 100 or more sets of cellulose fibers were extracted in a microscopic image in which the cellulose fibers can be confirmed, and an average fiber diameter was calculated from the fiber heights thereof. An average fiber length was calculated from a distance in the direction of fibers.

### [Carboxy Group Content in TEMPO-Oxidized Cellulose Fiber]

The cellulose fibers to be measured having the mass of 0.5 g on a dry basis are placed in a 100 mL beaker, and ion exchanged water or a mixed solvent of methanol / water = 2 / 1 is added thereto to make up a total volume of 55 mL. Five milliliters of a 0.01 M aqueous sodium chloride solution is added thereto to prepare a dispersion, and the dispersion is stirred until the cellulose fibers to be measured are sufficiently dispersed. A 0.1 M hydrochloric acid is added to this dispersion to adjust its pH to 2.5 to 3, and a 0.05 M aqueous sodium hydroxide solution is added dropwise to the dispersion with an automated titration instrument manufactured by DKK-TOA CORPORATION under the trade name of "AUT-701," under the conditions of a waiting time of 60 seconds. The values of electroconductivity and a pH are measured every minute, and the measurements are continued up to a pH of 11 or so to obtain an electroconductivity curve. A titrated amount of sodium hydroxide is obtained from this electroconductivity curve, and the anionic group content of the cellulose fibers to be measured is calculated in accordance with the following formula: $\begin{matrix}Carboxy Group Content , mmol / g = Titrated Amount of Sodium \\ Hydroxide \times Aqueous Sodium Hydroxide Solution Concentration \\ \left(0.05 M\right) / Mass of Cellulose Fibers to Be Measured \left(0.5 g\right)\end{matrix}$

### [Content of Each Component]

Content of each component other than water was calculated from the blended amount of each component.

The water content in the dispersion and the suspension was measured by Karl Fischer titration using CA-200, manufactured by Mitsubishi Analytech Co., Ltd.

The solid content concentration in each cellulose fiber was calculated from the difference to 100% by mass by measuring water content concentration in the sample using Infrared Moisture Meter MOC-120H, manufactured by Shimadzu Corporation. The water content concentration was measured every 30 seconds with a thermostat at 150°C for 1 g of sample, and the numerical value displayed at the time when the loss of mass for 30 seconds was 0.1% or less was used.

### [Measurement of Electroconductivity of Filtrate]

The electroconductivity of filtrate was measured with a compact electroconductivity meter LAQUA twin EC-33B, manufactured by HORIBA, Ltd.

### [Measurement of Average Degree of Polymerization of Anionically Modified Cellulose Fiber]

Average degree of polymerization of the anionically modified cellulose fiber was measured as set forth below.

### (1) Preparation of Solution for Measurement

The anionically modified cellulose fiber to be measured was accurately weighed in an amount of 0.06 g (dry mass) and placed in a 50 mL beaker, and water was added thereto of which solid content concentration was 1% by mass. To the mixture 0.006 g of sodium borohydride was added, and the mixture was stirred for 2 hours at ambient temperature. Thereafter, 18 g of acetone was added thereto, and subsequently, the mixture was centrifuged using a high-speed refrigerated centrifuge CR21G III, manufactured by Koki Holdings Co., Ltd., under a condition of 10°C, 10,000 G for 1 minute to remove the supernatant. To the residue 18 g of ethanol was added, the step of similar centrifugation to remove the supernatant was carried out three times to provide a precipitate washed with ethanol. The obtained precipitate was vacuum dried at 40°C for 12 hours to provide a reduced pulp in which aldehyde groups in the anionically modified cellulose fiber were reduced. To the obtained reduced pulp in an amount of 0.06 g, 15 mL of deionized water and 15 mL of 1M copper-ethylenediamine solution were added and the mixture was stirred for 1 hour at ambient temperature to provide solution for the measurement.

(2) Measurement of Average Degree of Polymerization The solution for measurement obtained in the above (1) was placed in a Ubbelohde viscometer, and allowed to stand in a thermostat held at 20°C ± 0.1°C for one hour. Thereafter, a flow time of liquid (t (second)) and a flow time of copper-ethylenediamine solution without addition of celluloses (t₀ (second)) were then measured to obtain an intrinsic viscosity [η] (dL / g) according to the following formula:
$\left[η\right] = \left[\left(t/{t}_{0}-1\right)/c\right] / \left[1+0.28\times \left(t/{t}_{0}-1\right)\right]$ c: cellulose concentration, g/dL

The average degree of polymerization of the anionically modified cellulose fiber (DPᵥ) was calculated from the obtained intrinsic viscosity [η]$\left[η\right] = 0.094 \times 162 \times {{DP}_{v}}^{0.67}$

### [Binding Amount and Introduction Ratio of Modifying Group of Each Cellulose Fiber]

The binding amount of the modifying group is obtained by the following IR determination method, and the binding amount and the introduction ratio thereof are calculated in accordance with the following formulas. For example when a modifying group is to be bound to TEMPO oxidized cellulose fiber, the IR determination of dried TEMPO oxidized cellulose fiber or the cellulose fiber bound with the modifying group is carried out with an infrared absorption spectrophotometer (IR), manufactured by Thermo Fisher Scientific K.K., trade name: Nicolet 6700 according to ATR method, and a binding amount and an introduction ratio of the modifying group are calculated in accordance with the following formulas A and B.$Binding Amount of Modifying Group , mmol / g = a \times \left(b-c\right) / d$
**a:** Carboxy Group Content of TEMPO Oxidized Cellulose Fiber, mmol/g
**b:** Peak Intensity at 1720 cm⁻¹ of TEMPO Oxidized Cellulose Fiber
**c:** Peak Intensity at 1720 cm⁻¹ of Cellulose Fiber Bound with Modifying Group
**d:** Peak Intensity at 1720 cm⁻¹ of TEMPO Oxidized Cellulose Fiber

### Peak Intensity at 1720 cm⁻¹: Peak Intensity Derived from Carbonyl Group of Carboxylic Acid

$Introduction Ratio of Modifying Group , mol % = 100 \times e / f$
**e:** Binding Amount of Modifying Group, mmol/g
**f:** Carboxy Group Content of TEMPO Oxidized Cellulose Fiber, mmol/g

### [Cellulose Fiber Amount in Each Cellulose Fiber (Conversion Amount)]

The cellulose fiber amount in each cellulose fiber (conversion amount) refers to an amount of only cellulose fibers in which the modifying group is removed in each cellulose fiber. Since the modified cellulose fiber in the present invention may have a larger formula weight of the modifying group than a certain level (for example, larger than a molecular weight of glucose), when explanation is reasonable by excluding the difference of the formula weight of the modifying group in the present specification, the amount is expressed by the amount of the cellulose fiber constituting the modified cellulose fibers (conversion amount), not the amount of the modified cellulose fibers.

### The amount of cellulose fibers (conversion amount) is measured by the following methods.

(a) In a case where "compound for modification" to be added is one kind

The amount of cellulose fiber (conversion amount) is calculated according to the following Formula E. $\begin{matrix}Amount of Cellulose Fiber \left(\begin{matrix}Convesrion \\ Amount\end{matrix}\right) , g = Mass of Cellulose Fiber Bound with Modifying \\ Group , g / \left[\begin{matrix}1 + Molecular Weight of Compound for Modification , \\ g / mol \times Binding Amount of Modifying Group , mmol / g \times 0.001\end{matrix}\right]\end{matrix}$ (b) In a case where "compound for modification" to be added is two or more kinds

The amount of the cellulose fibers (conversion amount) is calculated, taking a molar ratio of each of the compounds (i.e., a molar ratio when a total molar amount of the compounds for modification to be added is defined as 1) into consideration.

### [Confirmation of Crystal Structure in Each Cellulose Fiber]

The crystal structure of the cellulose fiber of a cellulose fiber raw material, a cellulose fiber having an ionic group, a modified cellulose fiber, or the like is confirmed by measuring with a diffractometer MinicFlex II, manufactured by Rigaku Corporation under the following conditions.

Preparation Condition of Measurement Pellet: A flat pellet having Area of 320 mm² × Thickness of 1 mm is prepared by applying pressure ranging from 10 to 20 MPa to the lyophilized subject cellulose fibers with a tableting machine.
X-Ray Diffraction Analysis Condition: a step angle of 0.01°, a scanning speed of 10°/min, measurement range: diffraction angle 2θ = 5 to 40°
X-Ray Source: Cu/Kα-radiation, tube voltage: 15 kv, tube current: 30 mA

Peak Splitting Conditions: After removing the background noise, a peak is fitted with a Gaussian function so that a difference in errors between 2θ = 13 - 23° falls within 5%.

The crystal structure of each cellulose fiber is confirmed by carrying out the measurement according to the above condition using the above diffractometer.

The crystallinity of cellulose I crystal structure is calculated using areas of X-ray diffraction peaks obtained by the above peak splitting based on the following formula (A). $Cellulose I Crystallinity , % = \left[{I}_{cr}/\left({I}_{cr}+{I}_{am}\right)\right] \times 100$ wherein I_{cr} is an area of diffraction peaks of a lattice face (002 face) (diffraction angle 2θ = 22 - 23°), and Iₐₘ is an area of diffraction peaks of an amorphous portion (diffraction angle 2θ = 18.5°), in X-ray diffraction.

### Preparation Example 1 (Preparation of Shortened Anionically Modified Cellulose Fiber)

### [Anionically Modified Cellulose Fiber]

As a raw material, an anionically modified cellulose fiber having physical properties shown in Table 1 was used.

### [Table 1]

**Table 1**

| | |
|---|---|
| Average fiber diameter | 39 µm |
| Average fiber length | 1003 µm |
| Carboxy group content | 1.3 mmol/g |
| Crystallinity | 65% |
| Average degree of polymerization | 160 |
| Solid content concentration | 30.1 |

The anionically modified cellulose fiber can be prepared, for example, as the following TEMPO oxidization treatment.

### [TEMPO Oxidization Treatment]

To a 2 L of PP beaker equipped with a mechanical stirrer and a stirring blade, 10 g of needle-leaf bleached kraft pulp fibers as a natural cellulose fiber of a raw material and 990 g of deionized water are weighed, and the content is stirred at 25°C, at 100 rpm for 30 minutes. Next, to 10 g of the pulp fibers, 0.13 g of 2,2,6,6-tetramethyl-1-pyperidin-n-oxyl (TEMPO), 1.3 g of sodium bromide and 35.5 g of 10.5% by mass sodium hypochlorite aqueous solution are added in this order. Next, pH stat titration is carried out with an automated titration instrument, and 0.5 M sodium hydroxide is added dropwise to maintain the pH to 10.5. The content is reacted at 25°C, at stirring speed of 100 rpm for 120 minutes. Next, 0.01 M hydrochloride is added thereto while stirring to adjust the pH of the suspension to 2. Next, the solid content is filtrated and separated by a suction filtration. The solid content is dispersed in deionized water, and the operation to filtrate and separate the solid content with suction filtration is repeated until the conductivity of the filtrate reaches 200 µS/cm or less. The resulting solid content can be subjected to a dehydration treatment to provide an anionically modified cellulose fiber.

[Preparation of Shortened Anionically Modified Cellulose Fiber] The anionically modified cellulose fiber having physical property values shown in Table 1 was subjected to an alkali hydrolysis treatment and a heat-water treatment, to prepare a shortened anionically modified cellulose fiber having physical property values shown in Table 2. A cellulose fiber having a carboxy group as an ionic group was prepared, as described above.

### [Table 2]

**Table 2**

| | |
|---|---|
| Average fiber diameter | 28 µm |
| Average fiber length | 130 µm |
| Carboxy group content | 1.3 mmol/g |
| Crystallinity | 75% |
| Average degree of polymerization | 80 |
| Solid content concentration | 28.7 |

The shortened anionically modified cellulose fibers can be prepared by, for example, the following alkaline hydrolysis treatment and heat-water treatment.

### [Alkaline Hydrolysis Treatment]

The suspension of anionically modified cellulose fiber having physical property values showed in Table 1 of which solid content amount is 144.5 g is diluted with 1000 g of deionized water, 1.4 g of 35% hydrogen peroxide solution (1 part by mass of hydrogen peroxide based on 100 parts by mass of solid content amount of the raw material cellulose fiber) was added thereto, and the pH is adjusted to 12 with 1 M sodium hydroxide aqueous solution. Next, the mixture is subjected to alkaline hydrolysis treatment at 80°C for 2 hours (4.3% by mass of solid content concentration of the suspension of the anionically modified cellulose fiber). After cooling the suspension to ambient temperature, 0.01 M hydrochloride is added thereto to adjust the pH of the suspension to 2. The solid content is filtrated and separated from the suspension by suction filtration.

### [Heat-Water Treatment]

The solid content obtained by the above alkaline hydrolysis treatment is dispersed in deionized water, and the operation to filtrate and separate the solid content with suction filtration is repeated until the conductivity of the filtrate reaches 200 µS/cm or less. Deionized water is added to the suspension so that the solid content concentration in the suspension is 5% by mass, the mixture is stirred at 95°C for 12 hours, and thereafter, the mixture is cooled to ambient temperature, whereby water suspension of shortened anionically modified cellulose fibers can be obtained. Shortened anionically modified cellulose fibers can be obtained by centrifuging the obtained water suspension. Here, as a physical property in a case where this shortened anionically modified cellulose fiber is finely pulverized, an average fiber diameter was 3.9 nm and an average fiber length was 130 nm.

### Preparation Example 2 (Preparation of Composition Containing Cellulose Fiber Bound with Modifying Group 1 and Resin)

To 1-methoxy-2-propanol (PGME), the shortened anionically modified cellulose fiber having physical property values shown in Table 2 was added, to provide a dispersion of which solid content concentration was 2.0% by mass. To 300 g of the obtained suspension, 4.1 g of EO/PO amine was added, and the mixture was stirred at 25°C for 1 hour, to provide a dispersion of the cellulose fiber bound with the modifying group. Here, the amount of EO/PO amine which is a compound for modification used was 0.26 equivalence to an ionic group of the shortened anionically modified cellulose fiber, i.e. a carboxy group.

To the dispersion of the obtained cellulose fiber bound with the modifying group, 300 g of epoxy resin was further added, and the mixture was stirred at 25°C for 1 hour, and thereafter the mixture was subjected to a dispersion treatment 5 times with a high-pressure homogenizer NanoVater L-ES, manufactured by YOSHIDA KIKAI CO., LTD. at 150 MPa. Thereafter, a composition containing a cellulose fiber bound with a modifying group 1 and a resin was obtained by distilling off PGME from the dispersion of the cellulose fiber bound with the modifying group with an evaporator. The obtained composition was liquid at ambient temperature.

### Preparation Example 3 (Preparation of Composition Containing Cellulose Fiber Bound with Modifying Group 2 and Resin)

To 1-methoxy-2-propanol (PGME), the shortened anionically modified cellulose fiber having physical property values shown in Table 2 were added, to provide a suspension of which solid content concentration was 2.0% by mass. To 300 g of the obtained dispersion, 1.4 g of trioctylamine was added, and the mixture was stirred at 25°C for 1 hour, to provide a suspension of the cellulose fiber bound with the modifying group. Here, the amount of trioctylamine which is a compound for modification used was 0.5 equivalence to an ionic group, i.e. a carboxy group of the shortened anionically modified cellulose fiber.

To the obtained dispersion of the cellulose fiber bound with the modifying group, 300 g of epoxy resin was further added, and the mixture was stirred at 25°C for 1 hour, and thereafter the mixture was subjected to a dispersion treatment 5 times with a high-pressure homogenizer NanoVater L-ES, manufactured by YOSHIDA KIKAI CO., LTD. at 150 MPa. Thereafter, a composition containing a cellulose fiber bound with a modifying group 2 and a resin was obtained by distilling off PGME from the dispersion of the cellulose fiber bound with the modifying group with an evaporator. The obtained composition was liquid at ambient temperature.

### Example 1 (Composition Containing Modified Cellulose Fiber and Resin)

To 4 g of the compositions obtained in Preparation Example 2 (containing 0.13 g of the cellulose fiber bound with the modifying group 1 (a mass of a cellulose fiber moiety in which a modifying group was removed from the cellulose fiber bound with the modifying group was 0.08 g) and 3.87 g of a resin), 0.2 g of curing agents and 0.12 g of curing accelerator were added, and the mixture was stirred at 25°C, at 2000 rpm for 10 minutes and defoamed at 25°C, at 2200 rpm for 2 minutes with a planetary centrifugal agitator Awatori Rentaro manufactured by THINKY CORPORATION. Thereafter, 0.048 g of 3-aminopropyltrimethoxysilane of the silane compound was added thereto, and the mixture was stirred at 25°C, at 2000 rpm for 5 minutes and defoamed at 25°C, at 2200 rpm for 2 minutes with a planetary centrifugal agitator Awatori Rentaro manufactured by THINKY CORPORATION, to provide a composition shown in Table 3.

### Example 2

The same procedure as the above Example 1 was carried out except that the amount of a silane compound added was changed to 0.16 g, to provide a composition shown in Table 3.

### Example 3

The same procedure as the above Example 1 was carried out except that the silane compound was changed to N-phenyl-3-aminopropyltrimethoxysilane and the added amount thereof was changed to 0.16 g, to provide a composition shown in Table 4.

### Example 4

The same procedure as the above Example 1 was carried out except that the silane compound was changed to n-propyltrimethoxysilane and the added amount thereof was changed to 0.16 g, to provide a composition shown in Table 4.

### Example 5

To 3.97 g of the compositions obtained in Preparation Example 3 (containing 0.10 g of the cellulose fiber bound with the modifying group 2 (a mass of the cellulose fiber moiety in which the modifying group was removed from the cellulose fiber bound with the modifying group is 0.08 g) and 3.87 g of resin), 0.2 g of curing agents and 0.12 g of curing accelerators were added, and the mixture was stirred at 25°C, at 2000 rpm for 10 minutes and defoamed at 25°C, at 2200 rpm for 2 minutes with a planetary centrifugal agitator Awatori Rentaro manufactured by THINKY CORPORATION. Thereafter, 0.16 g of 3-aminopropyltrimethoxysilane which is a silane compound was added thereto, and the mixture was stirred at 25°C, at 2000 rpm for 5 minutes and defoamed at 25°C, 2200 rpm for 2 minutes with a planetary centrifugal agitator Awatori Rentaro manufactured by THINKY CORPORATION, to provide a composition shown in Table 4.

### Comparative Example 1 and Comparative Example 2

The same procedure as ones in the above Example 1 was carried out except that the added amount of the silane compound was changed to 0 g (Comparative Example 1) or 0.016 g (Comparative Example 2), to provide compositions shown in Table 3.

### Comparative Example 3

A shortened anionically modified cellulose fiber, i.e. a cellulose fiber having an ionic group having physical property values shown in Table 2 were added to PGME, to provide a dispersion of which solid content concentration was 2.0% by mass.

To 300 g of the obtained dispersion, 300 g of epoxy resin was added, and the mixture was stirred at 25°C for 1 hour, and thereafter the mixture was subjected to a dispersion treatment 5 times with a high-pressure homogenizer NanoVater L-ES, manufactured by YOSHIDA KIKAI CO., LTD. at 150 MPa. Since the dispersion of the obtained cellulose fiber was aggregated and precipitated immediately after completion of dispersion treatment, a resin membrane could not produced.

### Comparative Example 4

The same procedure as the above Example 5 was carried out except that the silane compound was not used, to provide a composition shown in Table 4.

### Referential Example 1

The same procedure as the above Example 1 was carried out except that the cellulose fiber was not used, to provide a composition shown in Table 3.

### Test Example 1 (Evaluation of Dispersibility)

The dispersibility of the cellulose fiber bound with the modifying group was evaluated as follows.

With respect to Examples 1 to 2 and Comparative Examples 1 to 2, "PGME dispersion of the cellulose fiber bound with the modifying group" prepared as an intermediate product in Preparation Example 2 was considered as an evaluation subject, with respect to Comparative Example 3, "PGME dispersion of shortened anionically modified cellulose fiber" prepared as an intermediate product was considered as an evaluation subject, and each of them was allowed to stand at ambient temperature for one day, and the presence or absence of occurrence of precipitates was visually confirmed, to carry out evaluation based on the following evaluation criteria. When the evaluation result was A or B, dispersibility was judged as good, and the evaluation result having A was judged to be more excellent in dispersibility.

### A: Precipitate did not occur.

B: Occurrence of partial precipitates was confirmed.
F: Liquid component and solid product were completely separated, and all amount of the solid product were precipitated.
nt: Not evaluated.

### Test Example 2 (Evaluation of Resin Membrane)

### [Preparation of Resin Membrane]

Compositions containing the modified cellulose fibers obtained in each of Examples and the like and resins were applied to a copper foil in an application thickness of 170 µm with an applicator, manufactured by TESTER SANGYO CO., LTD, and cured by heating at 130°C for 2 hours to produce resin membranes.

### [Measurement of Storage Modulus]

The resin membranes were peeled from the copper foil, and rectangular samples having sizes of a width of 5 mm and a length of 40 mm were cut out.

Using a dynamic viscoelastometer manufactured by SII, under the trade name of "DMS6100," storage modulus of the samples was measured in a tensile mode under nitrogen atmosphere at a frequency of 1 Hz, while raising the temperature from 30° to 300°C at a rate of 10°C per minute, with distance between chucks being 20 mm. The values obtained from 30°C and 200°C were used as the number of storage modulus.

The storage modulus (E') shown in Table 3 and Table 4 are values at 30°C or 200°C, and an unit thereof is GPa. Since the higher the values are, the more excellent the strength is, it is shown that the higher the values of storage modulus at high temperature are, the more excellent in heat resistance the membranes are.

### [Measurement of Glass Transition Temperature (Tg)]

The resin membranes were peeled from the copper foil, and rectangular samples having sizes of a width of 5 mm and a length of 20 mm were cut out.

Using a dynamic viscoelastometer manufactured by SII, under the trade name of "DMS6100," glass transition temperature was measured in a tensile mode under nitrogen atmosphere at a frequency of 1 Hz, while raising the temperature from 30° to 300°C at a rate of 10°C per minute. The temperature of peak top of tanδ was used as glass transition temperature (Tg).

It is shown that the higher the glass transition temperature (°C) is, the more excellent the heat resistance is.

### [Table 3]

**Table 3**

| | | Example 1 | Example 2 | Comparative Example 1 | Comparative Example 2 | Comparative Example 3 | Referential Example 1 |
|---|---|---|---|---|---|---|---|
| Composition | Resin | Epoxy resin | | | | | |
| | Curing agent | Dicyandiamide | | | | | |
| | Curing accelerator | DCMU | | | | | |
| | CNF | Cellulose fiber bound with modifying group 1 | | | | Shortened anionically modified cellulose fiber | - |
| | Modifying group | EO/PO group | | | | - | - |
| | Silane compound | Amino | | - | Amino | | - |
| Blended amount of silane compound to CNF | | 60 | 200 | 0 | 20 | 0 | 0 |
| Evaluation | Dispersibility | A | A | A | A | F | nt |
| | Tg (°C) | 146 | 152 | 138 | 141 | | 151 |
| | E' @30°C | 3.4 | 3.4 | 2.7 | 2.8 | | 2.7 |
| | E' @200°C | 0.029 | 0.035 | 0.024 | 0.024 | | 0.026 |

### [Table 4]

**Table 4**

| | | Example 3 | Example 4 | Example 5 | Comparative Example 4 |
|---|---|---|---|---|---|
| Composition | Resin | Epoxy resin | | | |
| | Curing agent | Dicyandiamide | | | |
| | Curing accelerator | DCMU | | | |
| | CNF | Cellulose fiber bound with modifying group 1 | | Cellulose fiber bound with modifying group 2 | - |
| | Modifying group | EO/PO | group | Trioctyl group | |
| | Silane compound | N-Phenyl | Propyl | Amino | - |
| Blended amount of silane compound to CNF | | 200 | 200 | 200 | 0 |
| Evaluation | Dispersibility | A | A | B | B |
| | Tg (°e) | 143 | 141 | 152 | 146 |
| | E' @30°C | 3.1 | 2.9 | 3.6 | 2.6 |
| | E' @200°C | 0.026 | 0.025 | 0.033 | 0.023 |

The "Blended amount of silane compound to CNF" in Table 3 and Table 4 refers to the number of parts by mass of (blended) silane compound based on 100 parts by mass of cellulose fiber (CNF) part of the cellulose fiber bound with a modifying group.

The details of the main components used in the above Examples and the like are as follows.

### [Resin]

Epoxy resin, manufactured by Mitsubishi Chemical Corporation, jER828, epoxy equivalence = 184 to 194, weight average molecular weight = 370

### [Curing Agent]

Dicyandiamide, manufactured by Mitsubishi Chemical Corporation, DICY pulverized by a mini blender, manufactured by OSAKA CHEMICAL Co., Ltd. was used.

### [Curing Accelerator]

3-(3,4-dichlorophenyl)-1,1-dimethylurea (DCMU), manufactured by Thermo Scientific pulverized by a mini blender, manufactured by OSAKA CHEMICAL Co., Ltd. was used.

### [Silane Compound]

3-aminopropyltrimethoxysilane (abbreviated as "Amino" in tables), manufactured by Shin-Etsu Silicone, KBM-903
n-propyltrimethoxysilane (abbreviated as "Propyl" in tables), manufactured by Shin-Etsu Silicone, KBM-3033
N-phenyl-3-aminopropyltrimethoxysilane (abbreviated as "N-Phenyl" in tables), manufactured by Shin-Etsu Silicone, KBM-573

### [Others]

PGME: 1-methoxy-2-propanol, manufactured by Daicel Corporation
EO/PO amine: methoxypoly(oxyethylene/oxypropylene)-2-propylamine, manufactured by HUNTSMAN, Jeffamine M2070, Mw = 2000, EO:PO = 4:1

### INDUSTRIAL APPLICABILITY

The modified cellulose fiber of the present invention can be utilized in various molded product fields such as household appliance parts, electronics, aerospace, civil engineering and architecture, automobile, and onboard application.

## Claims

1. A resin composition obtained by blending:
a modified cellulose fiber binding a cellulose fiber bound with a modifying group other than a silanol group and a silane compound, and
a resin.

2. The resin composition according to claim 1, wherein the silane compound is one or more silane compounds selected from the group consisting of a chlorosilane compound, an alkoxy silane compound, an acetoxy silane compound and a silanol compound.

3. The resin composition according to claim 1 or 2, wherein the blended amount of the silane compound is 50 parts by mass or more, based on 100 parts by mass of a cellulose fiber moiety of the cellulose fiber bound with the modifying group other than the silanol group.

4. The resin composition according to any one of claims 1 to 3, wherein the blended amount of the modified cellulose is 4.0% by mass or more and 20% by mass or less in the resin composition.

5. The resin composition according to any one of claims 1 to 4, wherein the blended amount of the cellulose fiber is 0.1% by mass or more and 20% by mass or less in the resin composition.

6. The resin composition according to any one of claims 1 to 5, wherein the blended amount of the resin is 70% by mass or more and 95% by mass or less in the resin composition.

7. The resin composition according to any one of claims 1 to 6, wherein a mass ratio of the blended amount of the modified cellulose to the blended amount of the resin (the blended amount of the modified cellulose fiber / the blended amount of the resin) is 5/95 or more and 20/80 or less in the resin composition.

8. The resin composition according to any one of claims 1 to 7, wherein a mass ratio of the blended amount of the cellulose fiber to the blended amount of the resin (the blended amount of the cellulose fiber / the blended amount of the resin) is 0.1/99.9 or more and 20/80 or less in the resin composition.

9. A resin molded product comprising a resin composition as defined in any one of claims 1 to 8.

10. A method of producing a modified cellulose fiber comprising:
Step 1: binding a modifying group other than a silanol group to an ionic group of a cellulose fiber having the ionic group to obtain a cellulose fiber bound with the modifying group, and
Step 2: mixing the cellulose fiber bound with the modifying group with one or more silane compounds selected from the group consisting of a chlorosilane compound, an alkoxy silane compound, an acetoxy silane compound and a silanol compound,
wherein the blended amount of the silane compound in Step 2 is 50 parts by mass or more based on 100 parts by mass of a cellulose fiber moiety of the cellulose fiber bound with the modifying group.

11. A method of producing a modified cellulose fiber comprising:
Step 3: mixing a cellulose fiber having an ionic group with one or more silane compounds selected from the group consisting of a chlorosilane compound, an alkoxy silane compound, an acetoxy silane compound and a silanol compound to obtain a cellulose fiber bound with the silane compound, and
Step 4: binding a modifying group other than a silanol group to an ionic group of the cellulose fiber bound with the silane compound having the ionic group to obtain a modified cellulose fiber,
wherein the blended amount of the silane compound in Step 3 is 50 parts by mass or more based on 100 parts by mass of a cellulose fiber moiety of the cellulose fiber having the ionic group.

12. A modified cellulose fiber produced by a method as defined in claim 10 or 11.

13. A composition comprising a modified cellulose fiber as defined in claim 12.

14. The composition according to claim 13 further comprising an organic solvent and/or a resin.

15. An additive for a resin comprising a modified cellulose fiber as defined in claim 12.

16. The additive for a resin according to claim 15 further comprising an organic solvent.

17. A method of producing a resin composition comprising:
Step 5: binding a modifying group other than a silanol group to an ionic group of a cellulose fiber having the ionic group to obtain a cellulose fiber bound with the modifying group, and
Step 6: mixing one or more silane compounds selected from the group consisting of a chlorosilane compound, an alkoxy silane compound, an acetoxy silane compound and a silanol compound, the cellulose fiber bound with the modifying group and a resin,
wherein the blended amount of the silane compound in Step 6 is 50 parts by mass or more based on 100 parts by mass of a cellulose fiber moiety of the cellulose fiber bound with the modifying group.

18. A method of producing a resin composition comprising:
Step 7: mixing a cellulose fiber having an ionic group with one or more silane compounds selected from the group consisting of a chlorosilane compound, an alkoxy silane compound, an acetoxy silane compound and a silanol compound to obtain a cellulose fiber bound with the silane compound, and
Step 8: binding a modifying group other than a silanol group to an ionic group of the cellulose fiber bound with the silane compound having the ionic group to obtain a modified cellulose fiber,
wherein the blended amount of the silane compound in Step 7 is 50 parts by mass or more based on 100 parts by mass of a cellulose fiber moiety of the cellulose fiber having the ionic group.
